(19) Europäisches Patentamt
European Patent Office
Office européen des brevets

(11) Veröffentlichungsnummer: **0 002 284**
**B1**

# (12) EUROPÄISCHE PATENTSCHRIFT

(45) Veröffentlichungstag der Patentschrift: **01.02.84**

(51) Int. Cl.³: **C 08 G 59/42**

(21) Anmeldenummer: **78101555.7**

(22) Anmeldetag: **04.12.78**

## (54) Reaktive härtbare Polymerenmischung und Verfahren zur Herstellung gehärteter Produkte daraus.

(30) Priorität 07.12.77 DE 2754399
18.03.78 DE 2811914

(43) Veröffentlichungstag der Anmeldung:
13.06.79 Patentblatt 79/12

(45) Bekanntmachung des Hinweises auf die Patenterteilung:
01.02.84 Patentblatt 84/5

(84) Benannte Vertragsstaaten:
BE CH DE FR GB IT NL SE

(56) Entgegenhaltungen:
DE - A - 1 142 699
US - A - 3 772 228

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Kraft, Kurt, Im Hopfengarten 16, D-6200 Wiesbaden (DE)**
Erfinder: **Walz, Gerd, Dr., Pfingstbornstrasse 99, D-6200 Wiesbaden (DE)**
Erfinder: **Wirth, Thaddäus, Dr., Kemeler Weg 6, D-6209 Heidenrod 16 (DE)**

**EP 0 002 284 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Reaktive härtbare Polymerenmischung und Verfahren zur Herstellung gehärteter Produkte daraus

Die Erfindung betrifft eine reaktive härtbare Polymerenmischung sowie ein Verfahren zur Herstellung gehärteter Produkte aus dieser Mischung.

Es ist bekannt, daß Verbindungen, die einen Oxiranring enthalten, mit carboxylgruppenhaltigen Verbindungen unter Ringöffnung reagieren. Beim Einsatz von Verbindungen mit mehr als einem Oxiranring und mehr als einer Carboxylgruppe verläuft die Reaktion jedoch unter Ausbildung polymerer Ester, die sekundäre Hydroxylgruppen enthalten. Diese Polymerenbildung ist unter dem Begriff »säurehärtende Epoxydharze« seit langem bekannt.

Bekannt ist aber auch, daß diese Polymerenbildung mit genügend großer Geschwindigkeit und unter Vermeidung unerwünschter Nebenreaktionen (z. B. Ätherbildung) jedoch erst bei Temperaturen oberhalb 140°C abläuft. Dies bedeutet eine erhebliche Einschränkung in der Anwendung der »Säurehärtung« von Epoxydharzen. Es wurde schon vorgeschlagen, Oxiranringe enthaltende Systeme mit speziellen Polycarbonsäuren, deren Reaktivität als Härter weit über die der bisher bekannten hinausgeht, bereits bei Temperaturen unter 120°C zur Reaktion zu bringen. Obwohl dieser Vorschlag schon einen erheblichen Fortschritt bedeutet, war es erwünscht, solche Systeme noch zu verbessern.

Es ist ferner bekannt, halogenierte Dicarbonsäuren bei Raumtemperaturen mit epoxydierten Ölen unter Härtung umzusetzen. Dieses Verfahren hat jedoch den Nachteil, daß die Säuren nicht in genügend hoher Konzentration eingesetzt werden können, da sie aus dem System auskristallisieren.

So wurde auch schon die Umsetzung von Alkydharzen mit halogenierten Dicarbonsäuren bzw. deren Anhydriden und die weitere Umsetzung der so erhaltenen Produkte mit epoxydierten Fettsäureestern beschrieben. Dieses Verfahren bezieht sich nur auf wasserlösliche Systeme, die jedoch zur Härtung stets erhöhte Temperaturen benötigen.

Lösungsmittel enthaltende Systeme dieser Art, die ebenfalls bekannt sind, benötigen zur Härtung auch erhöhte Temperaturen. Da beide Systeme eine halogenierte Dicarbonsäurekomponente enthalten, zeigen sie auch die oben erwähnten Nachteile.

Aus einer Druckschrift ist die Hitzehärtung von Epoxydharzen mit sauren Estern der Pyromellithsäure einer speziellen Formel beansprucht. Die Alkoholkomponente dieser Ester hat nicht mehr als zwei primäre Alkoholgruppen. Sie kann auch ein Polyester mit endständigen OH-Gruppen sein, wobei jedoch keine OH-Zahl genannt ist.

Diese Konfiguration hat zur Folge, daß die freie COOH-Gruppe eine Schwächung der Reaktivität bzw. Acidität der aus der Anhydridgruppe der Pyromellithsäure stammenden COOH-Gruppen bewirkt.

Wie die dort angeführte Formel zeigt, befindet sich der esterartig gebundene Pyromellithsäurerest ausschließlich in endständiger Anordnung der Polyesterkette. Nach einem Beispiel, bei dem die Härtung innerhalb von 7 Tagen bei Raumtemperatur möglich ist, werden Systeme erhalten, deren Laugenbeständigkeit äußerst schlecht ist.

Eine weitere Druckschrift beschreibt eine wärmehärtbare Überzugsmischung aus

1) einem Polyepoxyd,
2) einem Härter hierfür,
3) einem Härtungsbeschleuniger,
4) einem Dispergator und
5) einem Kohlenwasserstoff-Lösungsmittel (siehe US-PS-3 772 229 Anspruch 1 und Spalte 2, Absatz 1).

Als Härter ist zum Beispiel Benzophenontetracarbonsäureanhydrid oder Trimellithsäureanhydrid oder ein wärmehärtbares Phenolharz verwendbar. Gemäß Spalte 5, Zeile 10 kommt als Härter auch ein Addukt von Trimellithsäureanhydrid und mehrwertigen Alkoholen in Frage, dessen Alkoholkomponente gemäß Spalte 6, Zeile 75 ein Glykol, z. B. Äthylenglykol sein kann. Als zusätzlicher Härter kann ein Phenolharz eingesetzt werden (siehe Spalte 7, Zeilen 18/19).

An keiner Stelle der zuletzt genannten Druckschrift ist eine Carbonsäureeinheit beschrieben, in der eine Polycarbonsäure oder deren Anhydrid an ein OH-Gruppen enthaltendes Polymeres oder Oligomeres gebunden ist.

Es wurde nun eine reaktive härtbare Polymerenmischung auf der Basis von A) Epoxydverbindungen und B) Polycarbonsäureeinheiten gefunden, die dadurch gekennzeichnet ist, daß die Mischung als Polycarbonsäureeinheit B)

a) eine oder mehrere Verbindungen der Formel (I) bzw. (Ia) (siehe Anspruch 1) worin

$R^1$ den Rest von einem oder mehreren polymeren Polymerisations- und/oder Kondensationsprodukten, die seitlich angeordnete OH-Gruppen tragen, der Gruppe Polyester, Polymerisate, beide mit einer OH-Zahl von jeweils 20 bis 300, vorzugsweise 40 bis 220, und Phenolharze mit einer OH-Zahl von 100 bis 800, vorzugsweise 150 bis 300,

$R^2$ den Rest eines Anhydrids der Formel (IIa) (siehe Anspruch 1) mit
z = 1 bis 3 und insbesondere mit

$R^4$ =

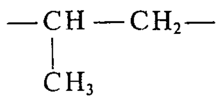

und

z = 1, Formel (VI) (siehe Anspruch 1) mit

u = 1 bis 8, worin

$R^4$ bevorzugt

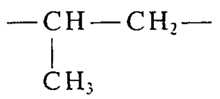

ist,
bzw. jeweils der entsprechenden Säuren
darstellt, wobei der Rest $R^2$ noch die in Formel (I) und (Ia) angegebenen Säure- bzw. Anhydridgruppen trägt,

$R^4$ einen zwei- bis vierwertigen aliphatischen Kohlenwasserstoffrest mit 1 bis 28, vorzugsweise 1 bis 15 C-Atomen, einen solchen Rest, der mindestens einmal durch Sauerstoffbrücken z. B. der Formel (XXIV) (s. Formelblatt) oder $-HC=CH-$-Gruppen unterbrochen ist oder mit einer Estergruppe mit 1 bis 6, vorzugsweise 1 bis 3 C-Atomen oder mit einer COOH-Gruppe substituiert ist, einen aromatischen Rest mit 6 bis 43 C-Atomen gemäß Formeln (XVI) bis (XXI) (siehe Anspruch 1),

wobei die aromatischen Reste gegebenenfalls durch mindestens einen Rest $R^6$ der Gruppe Alkyl, Alkoxy mit jeweils 1 bis 6 C-Atomen und Halogen substituiert sind, oder einen Piperazinrest, worin in Formel (XX) und (XXI) X die Bedeutung gemäß einer der Formeln (XXII) (siehe Anspruch 1), worin $n = 1$ bis 8 ist, hat,

$R^5$ dieselbe Bedeutung wie $R^2$ hat oder den Rest einer mindestens zweibasischen cyclischen Carbonsäure mit einer in o- oder peri-Stellung zur Esterbindung befindlichen COOH-Gruppe

bedeuten, für sich und/oder

b) in Form der nicht an den Rest $R^1$ addierten Komponenten und/oder einer oder mehrerer der Verbindungen
c) entsprechend Formel (I) wie unter a) definiert, jedoch mit der Abweichung, daß die Anhydridgruppen in Formel (I) ganz oder teilweise durch freie Säure- und/oder Estergruppen oder daß die diesen Anhydridgruppen entsprechenden freien, gegeneinander orthoständigen COOH-Gruppen in Formel (Ia) ganz oder teilweise durch Estergruppen ersetzt sind,
d) wie unter b) definiert, mit der Abweichung, daß die Polycarbonsäureverbindung mit dem Rest $R^2$ bzw. $R^5$ statt der Anhydridgruppen ganz oder teilweise freie Säure- und/oder Estergruppen aufweist,

enthält, wobei das Verhältnis der freien Carboxylgruppen der Polycarbonsäureeinheiten B) einschließlich der nicht an $R^1$ gebundenen Polycarbonsäurederivate zum Epoxydgruppenäquivalent in den Epoxydverbindungen 1 : 5 bis 5 : 1 und das Verhältnis der Anhydridgruppen der Polycarbonsäureeinheiten B) einschließlich der nicht an $R^1$ gebundenen Polycarbonsäurederivate zu den OH-Gruppen der Epoxydverbindungen 20 : 1 bis 1 : 20 beträgt.

Unter »Carbonsäureinheiten« sind somit Verbindungen zu verstehen, die freie Carboxyl-, Anhydrid- und/oder Estergruppen jeweils allein oder in Kombination enthalten können.

In Formel (I) bzw. (Ia) können $R^2$ und $R^5$ gleich oder verschieden sein. $R^5$ kann einen Rest von Anhydriden der Formeln (IIa), (IV), (V), (Vb), (VI), (VIII) und (XI) bis (XV) (siehe Ansprüche 1, 2 und Formelblatt) bedeuten, wobei in diesen Formeln die an den Rest $R^1$ gebundene Anhydridgruppe von Formel (I) mit dargestellt ist,

$R^4$ einen Kohlenwasserstoffrest mit insbesondere 2 bis 8 C-Atomen und
r und u jeweils eine ganze Zahl von 1 bis 8, vorzugsweise 1 bis 4,

bedeuten.

Typische Reste $R^4$ sind z. B.

$-(CH_2)_s-$

worin

s = 2 bis 10, vorzugsweise 2 bis 4 ist,

$-CH_2-CH-CH_3$ $\quad -CH_2-CH=CH-CH_2- \quad -(CH_2)_n-O-(CH_2)_n-$

wie

$-CH_2-CH_2-O-CH_2-CH_2 \quad -CH_2-CH-CH_2-$

ferner

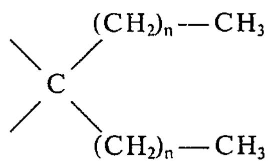

worin n jeweils 1 bis 8 ist.

$R^5$ kann außer den für $R^2$ genannten Resten auch den Rest eines Di- oder Tricarbonsäuresystems, z. B. von Trimellitsäure, Phthalsäure, 4-Aminophthalsäure, Tetrabrom-, Tetrachlorphthalsäure, Endomethylentetrahydrophthalsäure, Hexachlorendomethylen-tetrahydrophthalsäure, Naphthalsäure, 4-Aminonaphthalsäure, bedeuten.

Die erfindungsgemäßen Mischungen besitzen eine ungewöhnlich hohe Reaktivität. Sie ermöglichen, eine Härtung, d. h. die Ausbildung eines polymeren Netzwerkes, bei relativ niedrigen Temperaturen, in vielen Fällen bereits bei Raumtemperatur, z. B. bei 20° C, zu erzielen.

Nach einer Ausführungsform der Erfindung können die erfindungsgemäßen Mischungen mit Vorteil in Pulverform angewendet werden. Überraschenderweise wurde dabei festgestellt, daß die Handhabung derartiger Mischungen in der Praxis besonders einfach und umweltfreundlich ist.

Die Polycarbonsäureeinheiten (I) bzw. (Ia) lassen sich durch Umsetzung von oligo- bzw. polymeren Hydroxylgruppen enthaltenden Verbindungen mit solchen Bis-anhydriden herstellen, die eine Gruppierung gemäß einer der Formeln (IIa), (IV), (V), (Vb), (VI), (VIII), (XI) und (XIII) bis (XV) aufweisen (s. Ansprüche 1, 2 und Formelblatt). Geeignete Bis-anhydride — außer denen der Formeln (IV), (V), (Vb), (VI), (VIII), (XI) und (XIII) bis (XV) — sind beispielsweise

Benzophenontetracarbonsäuredianhydrid,
Naphthalintetracarbonsäuredianhydrid,
Tetrahydrofurantetracarbonsäuredianhydrid,
Cyclopentantetracarbonsäureanhydrid,

ferner die Anhydride nach Formel (IIa), wie sie beispielsweise durch Umsetzung von Trimellithsäureanhydrid und/oder den Bisanhydriden gemäß Formeln (IIa), (IV), (V) und (Vb), (VI) und (VIII), (XI) und (XIII) bis (XV) und/oder anderen oligomeren Bisanhydriden erhalten werden. Falls Carbonsäureeinheiten mit freien COOH- und/oder Estergruppen erwünscht sind, ist es zweckmäßig, die Bisanhydride vor oder nach ihrer Ankoppelung an die Verbindungen $R^1$ oder im Fall b) vor ihrem Vermischen mit den Verbindungen $R^1$ zumindest teilweise zu hydrolysieren bzw. zu verestern.

In der Regel enthält die Carbonsäureeinheit (I) bzw. (Ia) in einer Seitengruppe mit eingebautem Rest einer mindestens vierbasischen Carbonsäure mindestens zwei COOH- und mindestens eine Estergruppe, so daß die an den Rest $R^1$ gebundenen Moleküle in Form eines Partialesters, vorzugsweise Halbesters, vorliegen, wobei die Estergruppe anstelle von oder zusammen mit einer Anhydridgruppe vorhanden sein kann. Solche Estergruppen können Reste einwertiger Alkohole, wie Methanol, Äthanol, Hexanol, Octanol, Laurylalkohol, Stearylalkohol in iso- oder n-Form sein. Diese

Partialester können jeweils für sich oder im Gemisch mit anderen Carbonsäureeinheiten verwendet werden. Sie stellen ebenfalls ausgezeichnete Reaktionspartner für die Epoxydverbindungen dar. Wenn die Mischungskomponenten jedoch in dünner Schicht und in Gegenwart von Luftfeuchtigkeit miteinander umgesetzt werden, so ist die Anwesenheit freier COOH-Gruppen nicht unbedingt erforderlich. Es genügt vielmehr auch in vielen Fällen, wenn die Anhydridgruppe als solche vorhanden ist. In solchen Fällen dienen die in Orthostellung zur Estergruppe stehenden Carboxylgruppen als Starter. Sie werden durch die Reaktion mit den Oxiranringen der Komponente A) an die Komponente A) gebunden und setzen sekundäre Hydroxylgruppen frei, welche ihrerseits durch Reaktion mit den Anhydridgruppen neue Carboxylgruppen freisetzen, die mit weiteren Oxiranringen unter Ringöffnung reagieren. So läuft auch hier eine Netzwerkbildung ab, die nach einer Ausführungsform der Erfindung bereits unter milden Bedingungen, z. B. bei 20 bis 80° C, durchgeführt werden kann.

Wenn die Mischung gemäß Fall b) eingesetzt wird, stellt man in der Regel zunächst ein stabiles Gemisch aus der Epoxydkomponente A) und der OH-Gruppen enthaltenden Komponente her, dem man kurz vor der Verarbeitung die als Härter wirkenden Säureanhydride der Formeln (IIa), (IV), (V), (Vb), (VI), (VIII), (XI) und (XIII) bis (XV) bzw. deren reaktive Derivate zusetzt.

Es ist ferner möglich, daß die erfindungsgemäße Mischung neben der Carbonsäureeinheit B) zusätzlich mindestens ein nicht an eine Polymeren- oder Kondensationskette gebundenes Säureanhydrid einer Polycarbonsäure mit der Gruppierung gemäß Formeln (IIa), (IV), (V), (Vb), (VI), (VIII), (XI) und (XIII) bis (XV) und/oder Trimellitsäureanhydrid enthält. Weitere freie Säureanhydride sind z. B. solche der unter $R^5$ aufgezählten, ferner solche von Tetrahydrofurantetracarbonsäure, Benzofurantetracarbonsäure, Benzofuranhexacarbonsäure. Vorzugsweise werden die halogenierten Säuren zusammen mit anderen, nicht halogenierten Säuren eingesetzt. Auch diese zusätzlichen Anhydride können zumindest teilweise verestert oder unter Bildung freier Carboxylgruppen hydrolysiert sein. Auch in diesem Fall können die Mischungen bereits unter milden Bedingungen, z. B. bei Raumtemperatur oder für Mischungen in Pulverform, z. B. auch bei 80° C, zu Filmen mit ausgezeichneten Eigenschaften aushärten. Gegebenenfalls können auch diese zusätzlichen Anhydride in Form ihrer Partialester vorliegen. Die Esterbildung kann entweder an der Komponente B) oder schon vor deren Herstellung am Anhydrid bzw. an den freien COOH-Gruppen erfolgen.

Der Anteil der oligomeren Anhydride VI, bezogen auf die Gesamtmenge der Säureanhydride, beträgt zweckmäßig 0,1 bis 99,8, vorzugsweise 30 bis 70 Gew.-%.

Falls die Säureanhydride auch Trimellitsäureanhydrid enthalten, so beträgt dessen Anteil, bezogen auf die Gesamtmenge, 0,1 bis 30, vorzugsweise 5 bis 20 Gew.-%.

Der Begriff »polymere Polymerisations- und/oder Kondensationsprodukte« für $R^1$ umfaßt auch die Oligomeren. Die den Rest $R^1$ der Komponente B) bildenden Polyester müssen, wie sich aus Formel (I) ergibt, seitlich angeordnete OH-Gruppen tragen.

Sie können in an sich bekannter Weise aus bekannten Polycarbonsäuren, wie Phthalsäure, Isophthalsäure, Terephthalsäure, Halogenphthalsäuren, wie Tetrachlor- bzw. Tetrabromphthalsäure, Adipinsäure, Sebacinsäure, Fumarsäure, Maleinsäure, Endomethylentetrahydrophthalsäure und deren Hexachlor-Derivate, Trimellitsäure, gegebenenfalls zusammen mit Monocarbonsäuren, wie Benzoesäure, Butylbenzoesäure, Laurinsäure, Isononansäure, Fettsäuren natürlich vorkommender Öle bzw. aus Gemischen oder Anhydriden der genannten Säuren, sofern diese existieren, hergestellt sein.

Geeignete Alkoholkomponenten dieser Polyester sind z. B. mehrwertige Alkohole, wie Äthylenglykol, die Propandiole, Butandiole, Pentandiole, wie Neopentylglykol, Hexandiole, Diäthylenglykol, Cyclohexandimethanol, Trimethylpentandiol, Trimethyloläthan oder -propan, Glycerin, Pentaerythrit, Dipentaerythrit, Bis-hydroxyäthyliso- oder -terephthalsäureester, Tris-hydroxyäthylisocyanurat, gegebenenfalls zusammen mit einwertigen Alkoholen, wie Butanol, Octanol, Laurylalkohol, Linoleylalkhol, äthoxylierten bzw. propoxylierten Phenolen oder dergleichen, jeweils einzeln oder im Gemisch.

Die Polyester der Komponenten B) können auch durch mindestens teilweisen chemischen Abbau von hochmolekularen Polyestern, aromatischer Natur, wie Terephthalsäure-Äthylenglykol- oder -Butandiol-polyestern, Isophthalsäure-Äthylenglykol- oder Hexandiol-polyestern, unter Einwirkung von ein- und/oder mehrwertigen Alkoholen, Estern, Dicarbonsäuren oder dergleichen entstanden sein. Bei etwa erfolgter Umsetzung mit einwertigen Alkoholen können diese im Unterschuß umgesetzt worden sein.

Die Kondensationsharze — auch in Form von Polyestern — schließen auch solche mit mindestens einer der folgenden Gruppen Ester, Amid, Imid, Äther, Thioäther, Sulfon, Amin, ein. Die Hydroxylgruppen des Restes $R^1$ können auch phenolisch, vorzugsweise jedoch alkoholisch sein. Als Hydroxylgruppen enthaltende, den Rest $R^1$ bildende Verbindungen kommen beispielsweise in Frage Polymerisationsharze in Form von Polyvinylalkohol, Copolymeren aus Vinylacetat mit ungesättigten Monomeren, wie Styrol und/oder Acrylsäureester wobei diese Copolymeren zumindest partiell, z. B. zu Vinylalkohol-Einheiten, verseift sind; und Polymerisationsprodukte, die in bekannter Weise durch Homo- oder Copolymerisation von Hydroxyalkylacrylaten, bzw. -methacrylaten, bzw. -Maleinaten mit olefinisch ungesättigten Monomeren, z. B. Styrol, α-Methylstyrol, Vinyltoluol, Acrylsäurealkylestern, Allylverbindungen, Cyclopentadien und dessen Derivaten hergestellt sind.

Geeignete Phenolharze sind z. B. solche mit freien Hydroxymethyl- und/oder Hydroxyäthylgruppen,

wie Resole. Geeignete Phenolkomponenten sind ein- oder mehrwertige, ein- oder mehrkernige Phenole, wie Phenol, die verschiedenen Kresole, Xylenole mit zwei Wasserstoffatomen in ortho- und/oder para-Stellung zur Hydroxylgruppe, m-Xylenol, Butylphenole, Naphthol, Resorcin, Diphenylomethan, Diphenylolpropan, ferner Alkylphenole. Als solche werden gegenüber Formaldehyd di- oder tri-funktionelle Alkylphenole, insbesondere o- oder p-Alkylphenole mit geraden oder verzweigten Ketten oder cyclischen Alkyl- oder Aralkylresten, deren Alkylgruppe 1 bis 20 C-Atome aufweist, wie p-Isopropyl, p-tert.-Butyl-, p-Iso-octyl-, p-Iso-nonyl-, p-Iso-dodecyl-, o-sec-Butyl-, o-Isononyl-, o-Iso-dodecyl-, p-Cyclohexyl- sowie 3,5-Di-isopropyl- und 3,5-Di-isobutylphenol eingesetzt. Alle Alkylphenole können auch untergeordnete Mengen höher alkylierter Phenole enthalten. Vorzugsweise werden jedoch die Iso-Verbindungen der vorgenannten Reste, ferner tert.-Butylphenole eingesetzt. Bevorzugt sind jedoch Phenole mit mindestens zwei reaktiven Wasserstoffatomen, z. B. Phenol oder Resorcin.

Als Aldehyde können z. B. Formaldehyd in wäßriger Lösung, als Paraformaldehyd oder in Form anderer formaldehydabspaltender Substanzen, wie Trioxan, Acetaldehyd, z. B. in Form acetaldehydabspaltender Substanzen, höhere Aldehyde, wie Propionaldehyd, Butyraldehyd, Isobutyraldehyd, Benzaldehyd verwendet werden.

Geeignete Resole sind solche, bei denen bei der Kondensation das Molverhältnis Phenol zu Formaldehyd 1 : (0,9 bis 1,8), vorzugsweise 1 : (0,95 bis 1,4) beträgt.

Geeignete Epoxydverbindungen sind z. B. Polyepoxyd-alkane mit einer C-Zahl von 4 bis 20, vorzugsweise von 4 bis 12, und einer Oxiranringzahl von 2 bis 6, vorzugsweise von 2 bis 4, ferner epoxydierte Butadienöle, deren C-Alkylierungsprodukte, z. B. Isoprenöle; aliphatische Polyglycidyläther, z. B. Glycidyäther von Polyolen, wie Äthylenglykol, Di- und/oder Triäthylenglykol, 2,2-Dimethylpropandiol, Propandiol-1,2 oder -1,3, Butandiol-1,4 oder -1,3, Pentandiol-1,5, Hexandiol-1,6, ferner Glycerin, Trimethylolpropan, Cyclohexandimethanol, Siloxangruppen enthaltende Glycidyläther, epoxydierte Fettsäureester, z. B. epoxydiertes Sojaöl, epoxydiertes Leinöl bzw. dimere und/oder trimere Verbindungen dieses Typs; alicyclische Bis-epoxyde, z. B. Vinylcyclohexendioxyd, Limonendioxyd, Bis-(epoxy-cyclohexyl)-methan bzw. -rpopan, Dicyclopentadiendioxyd, Bis-(epoxy-cyclopentyläther); epoxydierte aliphatische und/oder cycloaliphatische Allyläther und/oder Allylester, z. B. Bis(-epoxypropyl)-hexahydrophthalat, Bis(-epoxy-propyl)-adipat; aber auch epoxydierte Polyester und/oder oligomere bzw. polymere Glycidylacryl- bzw. -methacrylsäureester und/oder deren Copolymere, z. B. mit Acryl- bzw. Methacrylsäureestern, Maleinsäureestern, Äthylen, Propylen, Butylen, Styrol, Vinyltoluol, $\alpha$-Methylstyrol, Vinylcyclohexan; trimerisierte Epoxyverbindungen, z. B. Triglycidylisocyanurat, jeweils einzeln oder im Gemisch. Es ist auch möglich, solche Epoxyde als Komponente A einzusetzen, die durch Umsetzung der Polycarbonsäureeinheiten der Formel (I) mit OH- oder Epoxydgruppen von Epoxyden unter Bildung von Estern, die noch Epoxydgruppen enthalten, erhalten werden.

Zusätzlich können auch Gemische der vorgenannten Polyepoxyd-Verbindungen mit Moneepoxyden zum Einsatz kommen. Geeignete Monoepoxyde sind z. B. Olefinoxyde, wie Octylenoxyd, Butylglycidyläther, Allylglycidyläther, Phenylglycidyläther, p-Butylphenolglycidyläther, Kresylglycidyläther, 3-(Pentadecyl)-phenolglycidyläther, Styryloxyd, Glydicylmethacrylat, Cyclohexenvinylmonoxyd, Dipentenmonoxyd, $\alpha$-Pinenoxyd, Glycidylester von tert.-Carbonsäuren.

Für die erfindungsgemäßen Mischungen, auch solche in Pulverform, eignen sich als Komponente A) auch flüssige Epoxyverbindungen, jedoch ist dabei zu beachten, daß von diesen nur soweit Gebrauch gemacht wird, daß noch ein festes Gemisch vorliegt. So wird man die flüssigen Anteile der Komponente A) vorzugsweise in untergeordneten Mengen, z. B. in einem Anteil von 10 bis 40 Gew.-%, bezogen auf die Gesamtmenge der Komponente A), einsetzen. Auch Komponente B kann flüssig sein. Andererseits ist es auch möglich, daß die ganz oder teilweise flüssige Komponente A) mit Komponente B) vermischt und das Gemisch anschließend, z. B. in einem Extruder, einer Vorreaktion unterworfen wird, so daß das Extrudat zwar fest, aber noch nicht vollständig ausgehärtet ist.

Die Härtung erfolgt im allgemeinen bei Temperaturen von 0 bis 350°C. Unter den genannten Epoxydverbindungen reagieren insbesondere aliphatische und cycloaliphatische sehr leicht mit der Carbonsäureeinheiten unter Vernetzung und Polymerenbildung. In vielen Fällen erhält man bereits bei Raumtemperatur, z. B. bei 20° C, auch ohne Katalysator eine ausgezeichnete Vernetzung. Jedoch wird durch Temperaturerhöhung z. B. auf 30 bis 210, vorzugsweise 80 bis 190° C die Härtungszeit außerordentlich verkürzt. Bei Verwendung pulverförmiger Mischungen härtet man im allgemeinen zur Herstellung geeigneter Produkte bei 80 bis 310° C, vorzugsweise 100 bis 280, insbesondere 140 bis 220° C.

Durch die erfindungsgemäßen Mischungen wird erstmals die Möglichkeit geschaffen, auch lösungsmittelfreie Systeme, nämlich Pulverlacke mit oder ohne Katalysatoren bei so niedrigen Einbrenntemperaturen, z. B. im Bereich von 100 bis 180, vorzugsweise 130 bis 160° C, bei üblicher Einbrenndauer, z. B. bis zu 30 Minuten, zu härten, daß auch eine große Anzahl wärmeempfindlicher organischer Pigmente ohne jegliche Beeinträchtigung verwendet werden kann. Bei Schmelzklebern kann die Härtungstemperatur sogar noch niedriger, z. B. bei 70 bis 80° C liegen.

Infolge der hohen Reaktivität der Härter werden auch unter Schocktrocknungsbedingungen, wie sie beispielsweise bei Coil- oder Can-Coating-Verfahren verwendet werden, also bei Temperaturen von

200 bis 350°C und extrem kurzen Zeiten, z. B. 10 Sekunden bis 3 Minuten, bereits ausgezeichnete Beschichtungen erhalten.

Ferner hat sich herausgestellt, daß die erfindungsgemäßen Mischungen auch eine gute sogenannte »Überbrennfestigkeit« aufweisen, d. h., daß sie auch bei lokaler Überhitzung beim Einbrennen auf eine höhere Temperatur als der normalen Einbrenntemperatur entspricht, gut beständig sind und keine Abbau- oder Versprödungserscheinungen zeigen. Selbst nach erheblicher Verlängerung der erforderlichen Einbrennzeit kommt es zu keiner Verminderung der guten Filmeigenschaften.

Überraschenderweise hat es sich gezeigt, daß die erfindungsgemäßen Mischungen, wenn sie in Pulverform vorliegen, trotz ihrer hohen Reaktivität, auch wenn sie Katalysatoren enthalten, bei Raumtemperatur oder leicht erhöhter Temperatur z. B. bis etwa 50°C, über Monate hinaus ohne nennenswerte Vorreaktion stabil sind.

Zweckmäßig beträgt das Verhältnis der freien Carboxylgruppen der Polycarbonsäureeinheiten B) zum Epoxydgruppenäquivalent in den Epoxydverbindungen A) 1 : 5 bis 5 : 1, vorzugsweise 1 : 1,5 bis 1 : 0,5. Innerhalb des bevorzugten Bereichs, z. B. bei einem Verhältnis von 1 : 1, ergeben sich besonders gute filmbildende Eigenschaften. Ein Überschuß an COOH-Gruppen kann eine Verbesserung der Haftung bewirken. Von einem Überschuß an Epoxydgruppen macht man z. B. bei stark lipophilen Systemen, z. B. für Primer, Gebrauch. Das gegenseitige Verhältnis wird man daher je nach dem gewünschten Verwendungszweck abstimmen.

Andererseits kann das Verhältnis der Anhydridgruppen der Polycarbonsäureeinheiten B) zu den OH-Gruppen der Epoxydverbindungen A) 20 : 1 bis 1 : 20, vorzugsweise 5 : 1 bis 1 : 5 betragen.

Nach einer Ausführungsform der Erfindung, insbesondere bei den pulverförmigen Mischungen, liegen die COOH-Gruppen der Komponente B) in einem Anteil von 0,1 bis 20, vorzugsweise 2 bis 10% der COOH-Gruppen-Äquivalente in Form eines Metallsalzes oder eines quartären Ammoniumsalzes vor. Die Anwesenheit solcher Salzgruppen ist besonders dann von Interesse, wenn man Überzüge mit einem Mattierungs- oder mit einem anderen Oberflächeneffekt erzielen will.

Als salzbildende Verbindungen sind beispielsweise geeignet: Verbindungen von Natrium, Kalium, Lithium, Calcium, Magnesium, Zink, Aluminium, z. B. Oxyde, Hydroxyde, Carbonate oder Salze organischer Carbon-Säuren, wie Acetate oder dergleichen, ferner tertiäre Amine, wie Trimethyl-, Triäthyl-, Tributylamin, Stickstoff enthaltende Heterocyclen, wie Pyrazole, Piperidin, Imidazole, Imidazolin oder dergleichen. Die Salzbildung kann z. B. dadurch erfolgen, daß man den Salzbildner der Mischung vor der Homogenisierung zusetzt.

Nach einer weiteren Ausführungsform der Erfindung kann die Mischung zusätzlich noch mindestens ein wärmehärtbares hydroxylgruppenhaltiges Kunstharz, z. B. Phenolharz und/oder Aminharze in einen Anteil von insgesamt bis zu 30, vorzugsweise von 2 bis 15 Gew.-% des Gesamtfestkörpergehalts enthalten. Durch einen solchen Zusatz kann insbesondere bei Härtung unter erhöhter Temperatur eine erhebliche Steigerung der Chemikalien- und Lösungsmittelbeständigkeit erzielt werden. Als Phenolharze kommen die obengenannten in Frage.

Geeignete Aminharze sind Harnstoff- und/oder Melaminharze mit freien OH-Gruppen, die gegebenenfalls teilweise mit einwertigen Alkoholen mit 1 bis 4 C-Atomen veräthert sind. Das Molverhältnis Melamin zu Formaldehyd bei einer Kondensation beträgt gewöhnlich 1 : 2 bis 4,5. Als Melaminkörper sind Penta- und Hexamethylolmelamin vorzuziehen.

Als andere zusätzliche OH-Gruppen enthaltende Harze kommen Polymere, beispielsweise Polyester mit freien OH-Gruppen und/oder Homo- oder Copolymerisate mit freien OH-Gruppen in Betracht, insbesondere für pulverförmige Mischungen. Hierfür in Frage kommende Verbindungen sind solche, wie sie oben als den Rest $R^1$ bildende Verbindungen beschrieben und näher definiert sind. Die Verwendung dieser zusätzlichen Harze kann den Vorteil mit sich bringen, daß das Fließvermögen, und gegebenenfalls auch, falls erwünscht, die Plastizität der Mischungen verbessert und bei daraus hergestellten Überzügen der Glanz erhöht werden.

Durch Zusatz von Katalysatoren kann in manchen Fällen die Reaktivität der Polycarbonsäurehärter noch erheblich gesteigert werden. Dies wirkt sich besonders günstig auf die notwendige Einbrennzeit, aber auch auf die erforderliche Einbrenntemperatur aus. So kann beispielsweise ein Katalysator enthaltendes pulverförmiges System bei einer Objekttemperatur von 200°C bereits innerhalb von 40 Sekunden ausgehärtet werden, wobei ebenso gute Filmeigenschaften erhalten werden wie bei üblichen Systemen bei 3 Minuten. Bei einer Einbrenndauer von 30 Minuten kann in Anwesenheit eines Katalysators die Temperatur von 140 auf 120°C gesenkt werden. Im allgemeinen beträgt der Anteil des Katalysators bis zu 5, vorzugsweise 0,01 bis 0,5 Gew.-%, bezogen auf Festkörpergehalt.

Geeignete Katalysatoren sind z. B. basische Katalysatoren anorganischer oder organischer Natur, wie Hydroxyde, Carbonate und Salze von Alkalimetallen, z. B. Lithiumhydroxyd, Kaliumcarbonat, Lithium-, Natrium- oder Kaliumsalze von organischen und anorganischen Säuren, wie Essig-, Propion-, Laurin-, Benzoe-, Salicyl-, Bor-, Wolfram-, Molybdän-, Diphenylborsäure, ferner deren Additionsverbindungen mit Kronenäthern oder ähnlichen Liganden, sowie Alkalisalze der Polycarbonsäureeinheiten der Formel (I) und (Ia), organische oder anorganische Zinkverbindungen, wie Zinkacetat, -phosphorwolframat, Cadmium-, Calcium-, Zinnverbindungen, wie Cadmiumoxyd, Dibutyloxozinn, Trimethylzinn-acetat, und/oder organische Basen, wie Amine mit Alkyl-, Cycloalkyl-, Hydroxyalkyl- und Aralkylgruppen, wie Trialkylamine, z. B. Triäthyl-, Tributylamin, Tricyclohexylamin, Tribenzylamin;

tert.-basische Säureamide, z. B. N,N'-Bis-(diäthylaminomethyl)-oxamid, N-Dibutylamino-äthyl-acetamid; cyclische Basen, wie Diazabicyclooctan, Diazobicyclononen bzw. -undecen; Imidazolderivate, wie 3-Methyl-, -Phenyl- oder -Cyclohexylimidazol, Imidazoline, N-Alkylpiperidine, N,N'-Dialkyl-piperazine, N-Alkyloxazolidin; organische und anorganische Phosphorverbindungen, z. B. Triphenylphosphit, Phosphorsäuren, Sulfonsäuren, wie p-Toluolsulfonsäure, 1,5-Naphthalindisulfonsäure oder Trialkyl- bzw. Triaryl-phosphine, wie Triphenylphosphin; N,N'-Tetraalkylaminoalkyl-oxamide, N-Dialkylaminoalkyl-oxamidsäurealkylester; jeweils einzeln oder im Gemisch. Auch Chelate des Magnesiums, Aluminiums und des Titans, wie sie z. B. in der deutschen Offenlegungsschrift 2 723 492 als Carboxylgruppen-Acceptoren beschrieben sind, sind zur Katalyse geeignet.

Darüber hinaus katalysieren auch Salze der vorgenannten organischen Basen mit organischen Säuren, z. B. mit Essigsäure, Propionsäure, Laurinsäure oder Salizylsäure die beanspruchten Reaktionen. Es können auch Katalysatorengemische zum Einsatz kommen.

Die erfindungsgemäßen Mischungen können für Überzugsmittel in Form von Lösungen in geeigneten Lösungsmitteln oder auch als Pulver eingesetzt werden. Es ist möglich, durch geeignete Wahl der Hydroxylgruppen enthaltenden Polymeren für die Additionsreaktion mit den Bis-Anhydriden, insbesondere solchen der Formel (II) bis (IX) und (XIX), zu mehr oder weniger flüssigen Verbindungen der Formel (I) und somit zu Systemen zu gelangen, die mit flüssigen Epoxydverbindungen A) auch ohne Lösungsmittelzusatz oder unter Verwendung sehr geringer Lösungsmittelmengen verarbeitet werden können.

Hierfür geeignete Lösungsmittel sind beispielsweise Toluol, Xylol, Butanol, Äthylacetat, Butylacetat, Äthylenglykoldiacetat, Äthylenglykolmonoäthyl- oder -butyläther oder deren Acetate, Äthylenglykoldimethyläther, Diäthylenglykoldimethyläther, Aromaten enthaltende Benzine, Cyclohexanon, Methyläthylketon, Aceton, Isophoron, Acetoxyglykolsäurebutylester, Acetoxyglykolsäureäthylester, jeweils einzeln oder im Gemisch. In vielen Fällen ist es auch möglich, diese Lösungsmittel mit jeweils bis zu 50% an Lackbenzinen, die arm an oder frei von Aromaten sind, zu vermischen.

Die erfindungsgemäßen pulverförmigen Mischungen für Beschichtungszwecke haben im allgemeinen einen Erweichungspunkt von 40 bis 200, vorzugsweise 55 bis 125°C (nach Durrans) und eine Glasübergangstemperatur von 22 bis 100, vorzugsweise 30 bis 70°C.

Die erfindungsgemäßen Mischungen sind aufgrund ihrer hohen Reaktivität, Lagerstabilität und Löslichkeit vielseitig verwendbar. Sie sind überall dort einsatzfähig, wo von Einbrenntemperaturen oberhalb 100°C Gebrauch gemacht wird, z. B. auf dem Gebiet der Lackierungen, wie Grundierungen, Decklacke, Einschichtlacke, schocktrocknende Systeme für Coil-coating zum Lackieren von Konservendosen. Die Erfindung ermöglicht deren Verwendung für Systeme in Verbindung mit flüssigen reaktiven Verdünnern, wie flüssigen Epoxydharz-Typen, und/oder mehrwertigen Alkoholen und/oder Hydroxysilikonen, sofern der Feststoffcharakter der Endmischung gewährleistet ist.

Mit den erfindungsgemäßen Mischungen, die eine ausgezeichnete Stabilität gegenüber UV-Strahlung aufweisen, können nun unpigmentierte, pigmentierte oder mit anderen Füllstoffen versehene Beschichtungssysteme, z. B. Lacke, hergestellt werden, die genügend rasch härten und Überzüge mit ausgezeichneten mechanischen Eigenschaften liefern. Als Zusätze kommen außer Farbstoffen und Pigmenten, Weichmacher, Stabilisatoren, Netzmittel, Dispergierhilfsmittel, Gleitmittel, Fließmittel und Katalysatoren in den üblichen Mengen in Betracht. Diese Substanzen können den Einzelkomponenten und/oder der Gesamtmischung zugesetzt werden. Die Dispergierhilfsmittel werden jedoch zweckmäßig vor der Homogenisierung zugemischt.

Die Verwendung von Farbstoffen und Pigmenten kommt z. B. dann in Betracht, wenn die erfindungsgemäßen Beschichtungsmittel als pulverförmige Lackfarbe, z. B. als Korrosionsschutzgrundierung, Zwischenbeschichtung oder Deckanstrich, verwendet werden. Vorteilhaft liegt dann das Verhältnis des Festkörpers im Bindemittel zu der Gesamtmenge an Pigment im Bereich von 1 : 0,1 bis 1 : 10, vorzugsweise 1 : 0,5 bis 1 : 5.

Als Farbstoffe bzw. Pigmente werden beispielsweise genannt: Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Cadmiumsulfid, Chromoxyd, Zinksulfid, Nickeltitangelb, Chromtitangelb, Eisenoxydrot, Eisenoxydschwarz, Ultramarinblau, Phthalocyaninkomplexe, Naphtholrot oder dergleichen. Dabei ist es überraschenderweise ohne Belang, ob die farbgebenden Pigmente anorganischer oder organischer Natur sind. Ferner sind metallische Pigmente oder solche mit metallartigem Aussehen, wie Aluminium, Aluminium-Bronzen verschiedener Farbtönung, Kupfer, Wolframat-Bronzen, Antimon- und Arsensulfidbronzen geeignet, die für die sogenannten »Metallic-Lacke« in Frage kommen.

Geeignete Füllstoffe sind z. B. Talkum, Glimmer, Kaolin, Kreide, Quarzmehl, Asbestmehl, Schiefermehl, Bariumsulfat, Silikate, Glasfasern, organische Fasern oder dergleichen, geeignete Antiabsetzmittel sind z. B. feinverteilte Kieselsäure, Bentonit, kolloide Silikate oder dergleichen.

Als Fließmittel eignen sich beispielsweise Ketonharze, Anhydridgruppen enthaltende Telomerisate, wie Styrol-Maleinsäureanhydrid-Telomerisate, oligomere Acryl- oder Methacrylsäureester.

Die erfindungsgemäßen Polymermischungen lassen sich auf die verschiedensten Unterlagen aufbringen, sofern diese den Härtungstemperaturen des Überzugs standhalten. Geeignete Unterlagen sind z. B. Keramik, Holz, Glas, Beton, Kunststoffe, vorzugsweise Metall, wie Eisen, Zink, Titan, Kupfer,

Aluminium, Stahl, Messing, Bronze, Magnesium oder dergleichen, wobei die Unterlagen gegebenenfalls noch durch geeignete mechanische und/oder chemische Vorbehandlung haftfreudigen bzw. korrosionsbeständiger gemacht werden können. Jedoch haften die erfindungsgemäßen Überzugsmittel ausgezeichnet auf den verschiedensten Metallunterlagen ohne haftvermittelnde Grundierung bzw. Zwischenschicht. Die gute Haftung dieser Lackierungen entspricht den Werten GT 0A bis GT 1A nach den Prüfvorschriften gemäß DIN 53 151. Außerdem lassen sich diese Überzüge sehr gut verformen, weisen hohe Wetterbeständigkeit und ausgezeichnete chemische Beständigkeit auf.

Die erfindungsgemäßen Polymermischungen sind für die Herstellung von korrosionschützenden Überzügen und/oder Zwischenbeschichtungen für die verschiedensten Anwendungsgebiete geeignet, insbesondere als resistente Lackierungen und Mattlackierungen. Weiter eignen sie sich für die Beschichtung und Auskleidung von Gegenständen, die mit aggressiven Medien wie Treibstoffen und Lösungsmitteln in Berührung kommen, außerdem für Schutzüberzüge gegen atmosphärische Einflüsse, wie Straßenmarkierungen, Beschichtungen von Haushaltgeräten, Maschinen, Fahrzeugteilen, Bauteile für elektrotechnische Zwecke bzw. deren Elemente, insbesondere für elektrische Leiter, sowie für Beschichtungen von thermisch beanspruchten Gegenständen.

Aufgrund ihrer günstigen Eigenschaften sind die erfindungsgemäßen Polymermischungen auch hervorragend für die Einschichtlackierung geeignet. Je nach Wahl der Komponente A) können mit den erfindungsgemäßen Polymermischungen beschichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert bleiben, sie kann aber auch als Zwischenschicht, also als Unterlage für weitere Überzüge dienen, die wiederum aus demselben oder einem anderen üblichen Beschichtungsmaterial bestehen können.

Die erhaltenen Überzüge stellen z. B. glänzende Filme mit ausgezeichneter mechanischer und chemischer Beständigkeit und mit guter Wetterstabilität dar. Andererseits ist es auch möglich, je nach Wunsch Mattlacke mit hervorragenden mechanischen und chemischen Eigenschaften herzustellen. Hierfür ist überraschenderweise kein hoher Anteil an Pigmenten und Füllstoffen erforderlich.

Wenn die erfindungsgemäße pulverförmige Mischung auf eine Schicht aus anderem Beschichtungsmaterial aufgetragen wird, ist es beispielsweise möglich, daß der Basislack auf der Grundlage eines nicht härtbaren Bindemittels, z. B. eines Thermoplasten einschließlich Vinylmonomeren, wie Vinylbutyrat oder dergleichen, Celluloselacken, wie solchen auf der Basis von Celluloseacetat, -acetobutyrat oder dergleichen besteht. Das Aufbringen der erfindungsgemäßen pulverförmigen Mischung erfolgt im allgemeinen erst nach der physikalischen Trocknung des Basislackes. Durch geeignete Auswahl des Untergrundes lassen sich auch Effektlacke, z. B. hinsichtlich der Farbgebung, wie irisierende Lacke, oder solche mit speziell profilierter Oberfläche erzielen.

Außerdem eignen sich die erfindungsgemäßen Mischungen in fester Form für 2-Komponenten-Klebestoffe, z. B. für hochreaktive Schmelzkleber, auch zur Herstellung von Schichtkörpern. Hierbei fällt bei der Verwendung pulverförmiger Mischungen ein Verdampfen der Lösungsmittel weg, was besonders bei großen Flächen von Vorteil ist. Die erfindungsgemäßen Mischungen eignen sich auch für flüssige und/oder lösungsmittelhaltige, wärmehärtbare Klebestoffe.

Auch als Bindemittel für textile, organische und/oder anorganische Materialien, sind sie einsetzbar. Die pulverförmigen Mischungen sind z. B. für Fasermaterial aus Asbest, Glas, Schlackenwolle und aus ausreichend thermostabilen organischen Fasern einsetzbar. Hierbei macht sich die Lösungsmittelfreiheit des umweltfreundlichen Systemes vorteilhaft bemerkbar. Die erfindungsgemäßen pulverförmigen Mischungen sind leicht dosierbar und können z. B. durch Aufstreuen aufgebracht werden. Die erfindungsgemäßen Mischungen sind auch zur Verwendung für härtbare Formmassen, Gießharze, Kitte, zellige oder poröse Stoffe, wie Schaumkörper, und als Isolierlack geeignet.

In den folgenden Vorschriften und Beispielen bedeuten jeweils, wenn nicht anders angegeben, T Gewichtsteile und % Gewichtsprozent. Die Zusammensetzung der Anhydride bzw. der Säuren, die durch Hydrolyse aus den Anhydriden gewonnen wurden, wurde jeweils mittels Gel-Permeationschromatographie bestimmt.

Die Herstellung der Säurekomponenten B) durch Hydrolyse ist in nachstehenden Tabellen 1 und 2 zusammengefaßt. Die Beispiele der reaktiven Mischungen sind aus Tabelle 3 ersichtlich.

Herstellung der Polycarbonsäuren bzw. -einheiten

A) Verbindung mit freien COOH-Gruppen (Formel (Ia) siehe Formelblatt)

Ein Anhydridgemisch mit einer Säurezahl ($H_2O$/Dimethylformamid DMF) von 608, (Butanol) von 298, hergestellt durch Umsetzung von Trimellitsäureanhydrid mit Propandiol-1,2, bestehend aus Trimellitsäureanhydrid und Anhydriden XIV und XV in dem in Tabelle 1 angegebenen Mengenverhältnis wird in 150 T Äthylglykolacetat (=Äthylenglykol-mono-essigsäureester-monoäthyläther) gelöst. Nach Erwärmen auf 60° C werden nach Zugabe von 0,3 T Katalysator 289 T einer 70%igen

Lösung eines Hydroxylgruppen enthaltenden Polyesters auf der Basis von Phthalsäureanhydrid, Isononansäure, Trimethylolpropan und Dimethylpropandiol in Äthylglykolacetat mit einer OH-Zahl von 100 (bezogen auf Festharz) zugemischt.

Danach wird die Temperatur auf 100°C gesteigert. Nach einer Stunde Reaktionszeit werden 12 T Wasser zugemischt und die Hydrolyse in 4 Stunden bei dieser Temperatur beendet. Säurezahl des Reaktionsgemischs vor und nach der Hydrolyse ist aus Tabelle 1 ersichtlich. Dies zeigt, daß die Addition und Hydrolyse praktisch vollständig abgelaufen sind.

Die so hergestellte Polycarbonsäureeinheit B) stellt eine mäßig viskose, klare, gelbliche Lösung dar, die ohne weitere Behandlung für die Härtung mit den beschriebenen Epoxydverbindungen geeignet ist (Festkörpergehalt: 60%).

B) Polyanhydrid (Formel (I))

300 T einer 50%igen Lösung des unter A) beschriebenen Anhydridgemisches in einer Mischung aus Äthylglykolacetat und Methyläthylketon (Volumenverhältnis 1 : 1) werden auf 70°C erwärmt und 211 T einer 60%igen Lösung eines Hydroxyacrylpolymeren auf der Basis von Hydroxyäthylacrylat, Hydroxypropylacrylat, Methacrylsäuremethylester, Butylmethacrylat und Styrol mit einer OH-Zahl von 160 (bezogen auf 100%igen Polymeres) versetzt. Nach 5stündigen Rühren bei 70°C ist die Addition vollständig. Die Endsäurezahl (Dimethylformamid/$H_2O$) entspricht 76,3% (theoretisch 75%) und die in Butanol 52% der Ausgangssäurezahl (theoretisch 50%). Das so erhaltene Reaktionsprodukt ist eine hellgelbliche, niedrigviskose Polyanhydridlösung. Sie ist in dieser Form als Anhydridhärter geeignet.

C) Monomere Polycarbonsäure, nicht an $R^1$ gebunden

300 T einer 50%igen Lösung des unter A) beschriebenen Anhydridgemischs in einer Mischung von Äthylglykolacetat und Butylacetat (7 : 3) werden unter Zusatz von 1 T N-Methylpiperidin und 0,5 ml Essigsäure auf 85°C erwärmt. Dann wird Wasser innerhalb 1 Stunde zugetropft. Das Reaktionsgemisch wird zur Vervollständigung der Hydrolyse 3 Stunden bei 85 bis 90°C gerührt. Es wird so eine klare, gelbliche, niedrigviskose Härterlösung erhalten.

D) bis F)

Die Carbonsäureeinheiten D) bis F) werden analog A) bis C) hergestellt. Als Bisanhydridkomponente dient ein Gemisch, hergestellt aus Trimellitsäureanhydrid, Propandiol-1,2, Trimethylolpropan und Glycerin im Molverhältnis 4 : 2,15 : 0,05 : 0,2. Die Säurezahlen dieses Gemischs betragen 508 in Wasser und 245 in Butanol.

Die OH-Gruppen enthaltende Polyester D) wurde hergestellt auf der Basis von Phthalsäureanhydrid, Isophthalsäure, Maleinsäureanhydrid, Propandiol und Glycerin.

Das Hydroxyacrylpolymere E) entspricht demjenigen von B).

G) Anhydridgemisch Säurezahl ($H_2O$) 506, Säurezahl (n-Butanol) 287, Hydroxyacrylatharz wie nach B) (OH Zahl 160) 60%ig in Äthylglykolacetat, 9,5 T Diazabicylooctan.

Die Ausgangsmischung wird bei 75°C bis zur Anfangssäurezahl umgesetzt. Nach Zugabe von 12 T Wasser wird bei 100°C hydrolysiert, bis die Endsäurezahl erreicht ist. Es wird eine klare, hellgelbe, mäßigviskose Polycarbonsäurelösung mit ca. 77% Festkörper erhalten.

H) (Formel (Ia)) Anhydridgemisch

(Formel IIa $R^4 = -CH_2-CH_2-$):

Säurezahl ($H_2O$/Dimethylformamid) 523, Säurezahl (n-Butanol) 266 Polyester (100%iges Harz OH-Zahl 210), 65%ig in Äthylglykolacetat. Addition: 4 Stunden bei 90 bis 100°C, Hydrolyse: 8 Stunden bei ca. 100°C.

I) (Formel (I)) Anhydridgemisch

(Formel IIa $R^4 = -CH_2-CH_2-O-CH_2-CH_2-$):

Säurezahl ($H_2O$/Dimethylformamid) 436, Säurezahl (n-Butanol) 253, OH-Polyacrylat: OH-Zahl 74, 40%ig in Methyläthylketon/Xylol (1 : 4). Addition: 2 Stunden bei 80°C, 2 Stunden bei 100°C, 4 Stunden bei 110°C.

J) (Formel (Ia)) Anhydridgemisch

$$\text{Formel IIa}\left(R^4 = -\overset{\displaystyle CH_3}{\overset{|}{C}}H-CH_2-\right):$$

Säurezahl ($H_2O$/Dimethylformamid) 512, Säurezahl (n-Butanol) 283. OH-Polyester: OH-Zahl 105, 55%ig in Äthylglykolacetat. Addition: 2 Stunden bei 65° C, 4 Stunden bei 120° C, Hydrolyse: 8 Stunden bei 100 bis 110° C.

K) (Formel (I)) Anhydridgemisch

$$\text{Formel IIa}\left(R^4 = -\overset{\displaystyle CH_3}{\overset{|}{C}}H-CH_2-\right):$$

Säurezahl ($H_2O$/Dimethylformamid) 512, Säurezahl (n-Butanol) 283. OH-Polyacrylat (Co-Polymer): OH-Zahl 48, 50%ig in Xylol/Äthylglykolacetat (3 : 7). Addition: 12 Stunden bei 50° C, 1 Stunde bei 90° C.

Tabelle 1

| | Nr. A | B | C | D | E | F | G | H | I | J | K |
|---|---|---|---|---|---|---|---|---|---|---|---|
| Anhydrid-Gemische | | | | | | | | | | | |
| TMSA*) % | 12,2 | 12,2 | 12,2 | 5,5 | 5,5 | 5,5 | 11,4 | 1,6 | 6,5 | 10 | 10 |
| Bis-Anhydrid % | 41,2 | 41,2 | 41,2 | 40,3 | 40,3 | 40,3 | 56,1 | 94,6 | 48,0 | 69,3 | 69,3 |
| oligomere Anhydride % | 46,6 | 46,6 | 46,6 | 54,2 | 54,2 | 54,2 | 32,5 | 4,1 | 45,5 | 20,7 | 20,7 |
| Anhydrid-Gemische | | | | | | | | | | | |
| Anteil T | 150 | 300 | 300 | 150 | 150 | 150 | 150 | 200 | 200 | 200 | 200 |
| Lösungsmittel | EGA+) | EGA + MEK') (1 : 1) | EGA + Butyl-acetat (7 : 3) | EGA | EGA | MEK | EGA | EGA + Xylol + MEK (7 : 2 : 1) | MEK/ Xylol (1 : 4) | EGA/ Xylol (8 : 2) | EGA/ Butyl-acetat (6 : 4) |
| Anteil T | 150 | 300 | 300 | 150 | 150 | 150 | 150 | 200 | 200 | 200 | 200 |
| $R^1$ | Poly-ester | OH—CO-polymer | – | Poly-ester | OH-Poly-acrylat | – | OH-Poly-acrylat | Poly-ester | OH-Poly-acrylat | Poly-ester | OH-Poly-acrylat |
| Anteil T | 289 | 211 | – | 272 | 198 | – | 198 | 192 | 736 | 443 | 1067 |
| %-Gehalt | 70 | 60 | – | 70 | 60 | – | 60 | 65 | 40 | 55 | 50 |
| $H_2O$ | | | | | | | | | | | |
| T | – | – | 11 | 12 | – | 10 | – | 14 | – | 15 | – |

Fortsetzung

| | Nr. A | B | C | D | E | F | G | H | I | J | K |
|---|---|---|---|---|---|---|---|---|---|---|---|
| Katalysator | Diazo-bicy-clooctan | — | a) N-Methyl-piperi-din + b) Essig-säure | Tri-äthyl-amin | Li-Benzoat | Diazo-bicy-clo-octan | Diazo-bicyclo-octan | Al-Tris-acetonyl-acetonat | — | N-Methyl-morpholin- + N-Methyl-piperidin | Tri-butyl-amin |
| Anteil T | 0,3 | — | a) 1 + b) 0,5 ml | 0,5 | 0,5 | 0,5 | 9,5 | 0,7 | — | 0,5 + 0;5 | 0,5 + 0,3*+) |
| Anfangs-säurezahl | | | | | | | | | | | |
| $DMF/H_2O$ | 245 | 258 | — | 216 | 281 | 470 | 212 ($H_2O$) | 244 ($H_2O$) | 436 | 176 ($H_2O$) | — |
| n-Butanol | 130 | — | 291 | 110 | 143 | 241 | 146 | 163 | 253 | 119 | — |
| Endsäurezahl | | | | | | | | | | | |
| $DMF/H_2O$ | 217 | 197 | — | 166 | 211 | 476 | 205 ($H_2O$) | 233 ($H_2O$) | 133,5 ($H_2O$) | 168 ($H_2O$) | 105 ($H_2O$) |
| n-Butanol | 210 | 134 | 560 | 161 | 144 | 468 | 200 | 227,5 | 90 | 162 | 66,5 |
| Festkörper % | 60 | 65 | 50,5 | ~60 | ~54 | ~51 | ~77 | 56 | — | — | — |

*) = TMSA = Trimellitsäureanhydrid.
+) = EGA = Äthylglycolacetat.
') = MEK = Methyläthylketon.
*+) = Eissessig.

Tabelle 2

| | Nr.<br>L | M | N |
|---|---|---|---|
| Einsatzmenge | 200 g PMDA[2])<br>890 g OH-Polyester-lösung[1])<br>0,5 g Tributylamin | 200 g BPDA[3])<br>603 g OH-Polyester-lösung[1])<br>14 g Wasser<br>0,5 g N-Methyl-piperididin<br>0,3 g Essigsäure | 200 g TFDA[4])<br>990 g OH-Polyester-lösung[1])<br>14 g Wasser<br>0,5 g Libenzoat |
| Addition h/°C | $11^{h}$100°C | $7^{h}$/115°C | $5^{h}$/100°C |
| Hydrolyse h/°C | – | $12^{h}$/100°C | $6^{h}$/100°C |
| Säurezahl ($H_2O$) vor Hydrolyse | 230,0 | 198,5 | 268,0 |
| Säurezahl (n-Butanol) vor Hydrolyse | 154,0 | 134,0 | 181,0 |
| Säurezahl ($H_2O$) nach Hydrolyse | – | 193,0 | 263,0 |
| Säurezahl (n-Butanol) nach Hydrolyse | – | 187,5 | 259,5 |
| Festkörper % | ~ 63 | ~ 67 | ~ 60 |

[1]) OH-Polyesterlösung von Beispiel J (OH-Zahl 05) 55%ig in Äthylglycolacetat.
[2]) PMDA = Pyromellitsäuredianhydrid.
[3]) BPDA = Benzophenontetracarbonsäure-dianhydrid.
[4]) TFDA = Tetrahydrofurantetracarbonsäure-dianhydrid.

Tabelle 3

| | Beispiel<br>1<br>G | 2<br>I | 3<br>F | 4<br>H | 5<br>J |
|---|---|---|---|---|---|
| Anhydrid- bzw. Säure-komponente B | Sz+) ($H_2O$)<br>= 203<br>182,0 g<br>55%ig | Sz ($H_2O$)<br>= 133<br>250,0 g<br>40%ig<br>Sz (But)<br>= 90 | Sz ($H_2O$)<br>= 468<br>196,0 g<br>51%ig | Sz ($H_2O$)<br>= 233<br>222,0 g<br>45%ig | Sz ($H_2O$)<br>= 168<br>200,0 g<br>50%ig |
| Epoxydverbin-dungen A | epoxydiertes Leinöl<br>EP-Zahl++):<br>9,0<br>85,0 g | epoxydiertes Sojaöl<br>EP-Zahl: 6,8<br>56,0 g | epoxydiertes Polybutadienöl<br>EP-Zahl: 6,0<br>100,0 g | epoxydiertes Lein- und Soja-öl 2 : 1<br>EP-Zahl: 8,3<br>80,3 g | Dicyclopenta-diendioxyd<br>EP-Zahl: 19,0<br>25,0 g |
| Katalysator % (bezogen auf Festharz) | – | 0,2 Diaza-bicyclooctan | Phenyl-imidazol | – | 0,05 N-Methylpiperidin |
| Lösungsmittel zur Ver-dünnung | Äthylglykol-acetat/Xylol<br>(1 : 1) | – | – | Butyl-acetat/Xylol<br>(2 : 1) | Xylol |

+) Säurezahl = Sz.
++) Expoxydzahl = EP.

Tabelle 3 (Fortsetzung)

| | Beispiel 6 K | 7 L | 8 M | 9 M | 10 M |
|---|---|---|---|---|---|
| Anhydrid- bzw. Säure-komponente B | Sz ($H_2O$) = 105 Sz (But) = 66,5 200,0 g 50%ig | Sz ($H_2O$) = 230 Sz (But) = 154 208,3 g 48%ig | Sz ($H_2O$) = 193 250,0 g 40%ig | Sz ($H_2O$) = 193 250,0 g 40%ig | Sz ($H_2O$) = 193 250,0 g 40%ig |
| Epoxydverbin-dungen A | Adipinsäure-bis-glycidyl-ester EP-Zahl: 12,1 24,0 g | epoxydiertes Leinöl EP-Zahl: 8,6 | epoxydiertes Sojaöl EP-Zahl: 6,6 83,0 g | epoxydiertes Sojaöl EP-Zahl: 6,6 108,0 g (30% Über-schuß) | expodiertes Sojaöl EP-Zahl: 6,6 58,0 g (30% Unter-schuß) |
| Katalysator % (bezogen auf Festharz) | 0,3 N-Dibutyl-oxamid-säure-butlester | N-Methyl-morpholin | N,N'-Tetra-butyloxamid 0,2 | N,N'-Tetra-butyloxamid 0,2 | N,N'-Tetra- |
| Lösungs-mittel zur Verdünnung | – | Methyläthyl-keton | Methyläthyl-keton/Xylol (3 : 1) | Methyläthyl-keton/Xylol (3 : 1) | Methyläthyl-keton/Xylol (3 : 1) |

Tabelle 3 (Fortsetzung)

| | Beispiel 11 N | 12 I | 13 M | 14 |
|---|---|---|---|---|
| Anhydrid- bzw. Säure-komponente B | Sz ($H_2O$) = 263 200,0 g 50%ig | Sz ($H_2O$) = 133 250,0 g 40%ig | Sz ($H_2O$) = 193 149,0 g 67%ig | OH-Acrylharz 60% in Äthylglykolacetat OH-Zahl: 160,0, 167,0 g Bis-Anhydrid-komponente D Sz ($H_2O$) = 508 Sz (Butyl) = 245 50%ig in Äthylglykol-acetat 122,0 g |
| Expoxyd-verbindungen A | Vinylcyclohexen-dioxyd EP-Zahl: 20,1 33,0 g | epoxydiertes Sojaöl EP-Zahl: 6,8 56,0 g und 32,0 g Melaminharz, methylveräthert, 50% in Xylol/ Keton-Gemisch (2 : 1) | expodiertes Sojaöl EP-Zahl: 6,6 58,0 g (30% Unter-schuß) 20,0 g Isodecyl-glycidylester EP-Zahl: 6,6 | expodiertes Leinöl EP-Zahl: 9,0 52,0 g |
| Katalsator | Li-stearat | – | N,N'-Tetrabutyl-oxamid | a) 2-Phenyl-2-imid-azolin + |
| %-Gehalt (bezogen auf Festharz) | 0,1 | – | 0,2 | b) Methyläthylketon a) 2 + b) 8,5 |
| Lösungsmittel zur Verdünnung | Methyläthylketon | – | – | – |

Mischungen in Pulverform

Die Herstellung der Säurekomponenten B) für die pulverförmigen Mischungen 15 bis 20 ergibt sich aus nachstehender Tabelle 5. Die darin angegebenen Säurezahlen beziehen sich jeweils auf 100%iges Festharz.

Herstellung der Polycarbonsäureeinheiten B)

a) 100 T des Anhydridgemisches D) bis F) werden bei 80°C geschmolzen. Innerhalb einer Stunde werden 79,4 T eines zerkleinerten Polyesters aus Phthalsäureanhydrid, Isophthalsäure, Dimethylpropandiol, Hexandiol-1,6 und Trimethylolpropan (OH-Zahl 160) zugegeben. Danach werden 6,6 T Wasser im Laufe von 20 Minuten zugetropft. Das klare Reaktionsgemisch wird noch weitere 4 Stunden unter Rühren bei 80 bis 85°C gehalten. Nach dem Abkühlen erhält man ein klares, sprödes, gut pulverisierbares hellgelbes Harz mit einer Säurezahl ($DMF/H_2O$) von 209, (n-Butanol) 203.

b) Es wird verfahren wie unter a), jedoch wird anstelle des Polyesters nunmehr ein Hydroxyalkylacrylpolymerisat auf der Basis von Hydroxyäthylacrylat, Hydroxypropylacrylat, Methacrylsäuremethylester, Butylmethacrylat und Styrol mit einer OH-Zahl von 100 (bezogen auf 100%igen Polymeres) in einem Anteil von 127 T auf 100 T Anhydridgemisch eingesetzt. Die zugesetzte Wassermenge beträgt 6,1 T. Man erhält ein klares, gut pulverisierbares, schwach gelb gefärbtes Harz mit einer Säurezahl ($DMF/H_2O$) von 170, (n-Butanol) von 166.

Herstellung der Mischungen in Pulverform

Zur lacktechnischen Prüfung wurden die erfindungsgemäßen pulverförmigen Mischungen 15 bis 20 mit handelsüblichem Titandioxydpigment im Verhältnis 1 : 1 vermischt, extrudiert, gemahlen und gesiebt. Die erhaltenen Pulverlacke wurden elektrostatisch aufphosphatisierte Bleche aufgesprüht und unter den in nachstehender Tabelle 7 erwähnten Härtungsbedingungen eingebrannt.

Beispiele

Nachstehende Tabellen 4, 6 und 7 geben eine Übersicht über die erfindungsgemäßen Mischungen aus den Carbonsäureeinheiten B) oder den Polycarbonsäureanhydriden und der Epoxydkomponente A) und gegebenenfalls weiterer Harzkomponenten sowie über die Härtungsbedingungen der einzelnen Mischungen und die an den gehärteten Produkten ermittelten Prüfergebnisse. Bei der Einstufung der Kratzfestigkeit bedeutet 0 = bester Wert und 5 = schlechtester Wert.

Tabelle 6 und 7 beziehen sich nur auf die Mischungen in Pulverform. Darin ist die Anhydridkomponente B) mit a) und b) bezeichnet.

Diskussion der Ergebnisse

Wie aus Tabellen 4, 6 und 7 hervorgeht, zeigen alle Proben, gleichgültig wie die Zusammensetzung der einzelnen Härter bzw. der Aufbau der Epoxydkomponente A) ist, ausgezeichnete lacktechnische Eigenschaften und eine hohe Chemikalienbeständigkeit.

Tabelle 4

| | Härtungsbedingungen | | | | | Topf-zeit Std. | Kl.-T. min |
|---|---|---|---|---|---|---|---|
| | Raum-temperatur | | 80°C 30 min | | 140°C 30 min | | |
| | Messung nach Tagen | | | | | | |
| | 1 | 7 | 1 | 7 | 7 | | |
| Beispiel 1 | | | | | | | |
| Pendelhärte nach König (s) | 94 | 171 | 150 | 176 | 205 | 100 | 80 |
| Xylolbeständigkeit (min) | <1 | >120 | 45 | >120 | >120 | | |
| Kratzfestigkeit | 5 | 1 | 3 | 0 | 0 | | |
| Erichsentiefung (mm) | 9,5 | 10,2 | 8,8 | 9,2 | 8,5 | | |
| Glanz nach Lange (60°) | 95 | 90 | 89 | 86 | 85 | | |
| Beispiel 2 | | | | | | | |
| Pendelhärte nach König (s) | 102 | 150 | 130 | 155 | 170 | 48 | 60 |
| Xylolbeständigkeit (min) | <1 | 30 | 20 | 40 | 45 | | |
| Kratzfestigkeit | 5 | 2–3 | 3,5 | 2 | 1 | | |
| Erichsentiefung (mm) | 8,1 | 8,2 | 9,0 | 8,8 | 7,8 | | |
| Glanz nach Lange (60°) | 96 | 93 | 91 | 89 | 92 | | |
| Beispiel 3 | | | | | | | |
| Pendelhärte nach König (s) | 94 | 176 | 175 | 207 | 230 | 24 | 360 |
| Xylolbeständigkeit (min) | 5 | >120 | 60 | >120 | >120 | | |
| Kratzfestigkeit | 5 | 0 | 1 | 0 | 0 | | |
| Erichsentiefung (mm) | 7,5 | 6,8 | 8,2 | 8,5 | 6,8 | | |
| Glanz nach Lange (60°) | 97 | 96 | 93 | 95 | 89 | | |
| Beispiel 4 | | | | | | | |
| Pendelhärte nach König (s) | 114 | 196 | 195 | 227 | 240 | 12 | 45 |

Fortsetzung

| | Härtungsbedingungen Raum-temperatur | | 80°C 30 min | | 140°C 30 min | Topf-zeit Std. | Kl.-T. min |
|---|---|---|---|---|---|---|---|
| | Messung nach Tagen | | | | | | |
| | 1 | 7 | 1 | 7 | 7 | | |
| Beispiel 4 | | | | | | | |
| Xylolbeständigkeit (min) | 10 | >120 | 80 | >120 | >120 | | |
| Kratzfestigkeit | 4 | 0 | 0 | 0 | 0 | | |
| Erichsentiefung (mm) | 7,7 | 7,9 | 8,0 | 8,3 | 6,9 | | |
| Glanz nach Lange (60°) | 89 | 87 | 91 | 93 | 86 | | |
| Beispiel 5 | | | | | | | |
| Pendelhärte nach König (s) | 70 | 130 | 110 | 140 | 155 | 40 | 35 |
| Xylolbeständigkeit (min) | <1 | 22 | 28 | 28 | 30 | | |
| Kratzfestigkeit | 5 | 2 | 3 | 2 | 2 | | |
| Erichsentiefung (mm) | 9,5 | 8,4 | 8,8 | 9,1 | 7,5 | | |
| Glanz nach Lange (60°) | 93 | 91 | 89 | 92 | 93 | | |
| Beispiel 6 | | | | | | | |
| Pendelhärte nach König (s) | 30 | 70 | 60 | 85 | 90 | 90 | 140 |
| Xylolbeständigkeit (min) | <1 | <1 | <1 | <1 | 2 | | |
| Kratzfestigkeit | 5 | 4 | 4 | 4 | 3 | | |
| Erichsentiefung (mm) | 10,5 | 10,7 | 10,2 | 10,4 | 9,8 | | |
| Glanz nach Lange (60°) | 98 | 102 | 96 | 96 | 95 | | |
| Beispiel 7 | | | | | | | |
| Pendelhärte nach König (s) | 75 | 145 | 150 | 186 | 195 | 20 | 45 |
| Xylolbeständigkeit (min) | <1 | >120 | 35 | >120 | >120 | | |

Fortsetzung

| | Härtungsbedingungen Raumtemperatur | | 80°C 30 min | | 140°C 30 min | Topfzeit Std. | Kl.-T. min |
|---|---|---|---|---|---|---|---|
| | Messung nach Tagen | | | | | | |
| | 1 | 7 | 1 | 7 | 7 | | |
| Beispiel 7 | | | | | | | |
| Kratzfestigkeit | 5 | 2 | 2 | 2 | 1 | | |
| Erichsentiefung (mm) | 7,5 | 7,9 | 7,3 | 8,1 | 6,9 | | |
| Glanz nach Lange (60°) | 81 | 83 | 79 | 75 | 71 | | |
| Beispiel 8 | | | | | | | |
| Pendelhärte nach König (s) | 58 | 120 | 110 | 160 | 176 | 48 | 120 |
| Xylolbeständigkeit (min) | < 1 | 45 | 30 | 50 | 70 | | |
| Kratzfestigkeit | 5 | 2 | 2/3 | 2 | 1 | | |
| Erichsentiefung (mm) | 8,0 | 8,5 | 9,5 | 9,2 | 9,2 | | |
| Glanz nach Lange (60°) | 91 | 90 | 87 | 89 | 85 | | |
| Beispiel 9 | | | | | | | |
| Pendelhärte nach König (s) | 30 | 90 | 50 | 105 | 150 | 60 | 240 |
| Xylolbeständigkeit (min) | < 1 | 2 | 3 | 5 | 5 | | |
| Kratzfestigkeit | 5 | 4 | 3 | 3 | 3 | | |
| Erichsentiefung (mm) | 10,5 | 10,2 | 10,7 | 11,0 | 9,8 | | |
| Glanz nach Lange (60°) | 102 | 99 | 94 | 96 | 91 | | |
| Beispiel 10 | | | | | | | |
| Pendelhärte nach König (s) | 70 | 135 | 120 | 165 | 170 | 55 | 90 |
| Xylolbeständigkeit (min) | < 1 | 2 | 4 | 6 | 7 | | |
| Kratzfestigkeit | 5 | 3 | 3 | 2 | 2 | | |
| Erichsentiefung (mm) | 7,0 | 6,6 | 6,8 | 7,0 | 6,0 | | |

Fortsetzung

| | Härtungsbedingungen Raum-temperatur | | 80°C 30 min | | 140°C 30 min | Topf-zeit Std. | Kl.-T. min |
|---|---|---|---|---|---|---|---|
| | Messung nach Tagen | | | | | | |
| | 1 | 7 | 1 | 7 | 7 | | |
| Beispiel 10 | | | | | | | |
| Glanz nach Lange (60°) | 83 | 81 | 84 | 87 | 79 | | |
| Beispiel 11 | | | | | | | |
| Pendelhärte nach König (s) | 105 | 170 | 150 | 175 | 185 | 16 | 45 |
| Xylolbeständigkeit (min) | < 1 | 28 | 20 | 45 | 50 | | |
| Kratzfestigkeit | 4 | 3 | 2 | 2 | 2 | | |
| Erichsentiefung (mm) | 7,0 | 7,5 | 6,8 | 6,9 | 7,8 | | |
| Glanz nach Lange (60°) | 88 | 86 | 85 | 83 | 85 | | |
| Beispiel 12 | | | | | | | |
| Pendelhärte nach König (s) | 70 | 90 | 160 | 195 | 210 | 36 | 300 |
| Xylolbeständigkeit (min) | < 1 | < 1 | 90 | 120 | 120 | | |
| Kratzfestigkeit | 5 | 5 | 2 | 1,5 | 0 | | |
| Erichsentiefung (mm) | 10,1 | 10,1 | 6,8 | 7,0 | 6,5 | | |
| Glanz nach Lange (60°) | 98 | 99 | 91 | 89 | 94 | | |
| Beispiel 13 | | | | | | | |
| Pendelhärte nach König (s) | 65 | 120 | 125 | 145 | 163 | 90 | 180 |
| Xylolbeständigkeit (min) | < 1 | < 1 | 2 | 3 | 4 | | |
| Kratzfestigkeit | 5 | 4 | 4 | 3 | 3 | | |
| Erichsentiefung (mm) | 8,0 | 8,5 | 8,1 | 7,8 | 8,2 | | |
| Glanz nach Lange (60°) | 92 | 88 | 96 | 98 | 102 | | |

Fortsetzung

| | Härtungsbedingungen | | | | | Topf-zeit Std. | Kl.-T. min |
|---|---|---|---|---|---|---|---|
| | Raum-temperatur | | 80°C 30 min | | 140°C 30 min | | |
| | Messung nach Tagen | | | | | | |
| | 1 | 7 | 1 | 7 | 7 | | |
| Beispiel 14 | | | | | | | |
| Pendelhärte nach König (s) | 70 | 186 | 173 | 218 | 219 | 16 | 75 |
| Xylolbeständigkeit (min) | 16 | 38 | 30 | 85 | >120 | | |
| Kratzfestigkeit | 5 | 3 | 1 | 1,5 | 0 | | |
| Erichsentiefung (mm) | 9,0 | 9,5 | 8,7 | 8,3 | 7,9 | | |
| Glanz nach Lange (60°) | 92 | 88 | 87 | 84 | 81 | | |

+) Klebfreitrocknung min.

Tabelle 5

| | Nr. a) | b) |
|---|---|---|
| Anhydridgemisch | | |
| Anteil T | 100 | 100 |
| $R^1$ | Polyester | OH-Copolymer |
| Anteil T | 79,4 | 127 |
| $H_2O$ T | – | 6,1 |
| Endsäurezahl DMF/$H_2O$ | 209 | 170 |
| n-Butanol | 203 | 166 |

Tabelle 6

| | Beispiel 15 a) | 16 b) | 17 b) | 18 a) | 19 a) | 20 b) |
|---|---|---|---|---|---|---|
| Anhydrid-Komponente B | SZ ($H_2O$) 209 (Butanol) 203 | SZ ($H_2O$) 170 (Butanol) 166 | | | | |
| | 100 T | 100 T | 100 T | 100 T | 100 T | 100 T |

Fortsetzung

| | Beispiel 15 a) | 16 b) | 17 b) | 18 a) | 19 a) | 20 b) |
|---|---|---|---|---|---|---|
| Epoxyd-Verbindung A | I Fp. 68°C | II Fp. 86°C | I | II | I | II |
| | EP-Zahl 3,17 | EP-Zahl 2,06 | | | | |
| | EP + Wert 0,198 | EP + Wert 0,129 | | | | |
| | 190 T | 230 T | 101 T | 265 T | 117 T | 145 T |
| | | | + Triglycidylcyanurat | + expoxydiertes Leinöl, flüssig | + II | |
| | | | | EP-Zahl 9,0 | | |
| | | | 10 T | 5 T | 110 T | |
| weitere Harze | – | – | – | – | Hexamethoxymethylmelamin | Dimethylolharnstoff |
| | | | | | Fp. ~ 54°C | Fp. 123°C |
| | | | | | 3 T | 7 T |

Tabelle 7

| | Härtungsbedingungen<br>150°C<br>30′<br>Beispiel<br>15 | 280°C<br>90 s | 160°C<br>30′<br>16 | 295°C<br>60 s | 180°C<br>20′<br>17 | 270°C<br>90 s | 160°C<br>30′<br>18 | 280°C<br>30 s | 190°C<br>30′<br>19 | 310°C<br>30 s | 140°C<br>30′<br>20 | 260°C<br>120 s |
|---|---|---|---|---|---|---|---|---|---|---|---|---|
| Pendelhärte nach König (s) | 186 | 193 | 184 | 200 | 205 | 215 | 190 | 203 | 204 | 215 | 224 | 210 |
| Xylolbeständigkeit (min) | 4 | 10 | 10 | 15 | >60 | >60 | 20 | 18 | >60 | >60 | >120 | >120 |
| Kratzfestigkeit | 2 | 2–3 | 2 | 1 | 0–1 | 1 | 1–2 | 1 | 0 | 0 | 0 | 0 |
| Schlagtiefung Zoll/lb | 20 | 40 | 40 | 36 | 36 | 24 | 120 | 100 | 16 | 12 | 64 | 16 |
| Erichsentiefung (min) | 9,8 | 9,2 | 9,2 | 8,9 | 9,7 | 8,4 | 9,6 | 9,3 | 8,3 | 8,0 | 9,6 | 8,9 |
| Glanz nach Lange (60°) | 92 | 90 | 94 | 94 | 89 | 94 | 96 | 92 | 84 | 80 | 84 | 76 |

## Patentansprüche

1. Reaktive härtbare Polymerenmischung auf der Basis von A) Epoxydverbindungen und B) Polycarbonsäureeinheiten, dadurch gekennzeichnet, daß die Mischung als Polycarbonsäureeinheit B) eine oder mehrere Verbindungen a) bis d)

a) der Formel

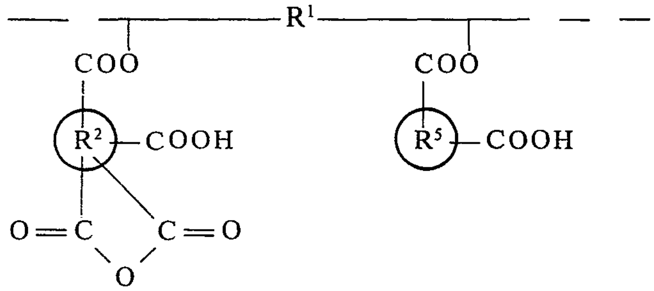

(I)

bzw.

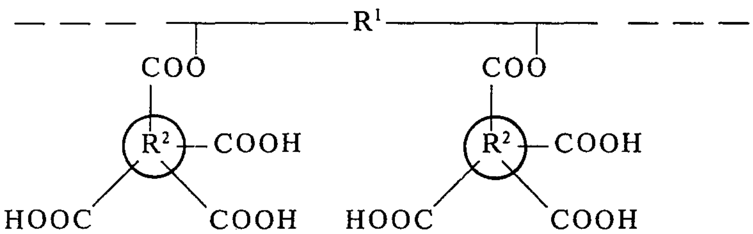

(Ia)

worin

$R^1$ den Rest von einem oder mehreren polymeren Polymerisations- und/oder Kondensationsprodukten, die seitlich angeordnete OH-Gruppen tragen, der Gruppe Polyester, Polymerisate, beide mit einer OH-Zahl von jeweils 20 bis 300 und Phenolharze mit einer OH-Zahl von 100 bis 800,

$R^2$ den Rest eines Anhydrids der Formel

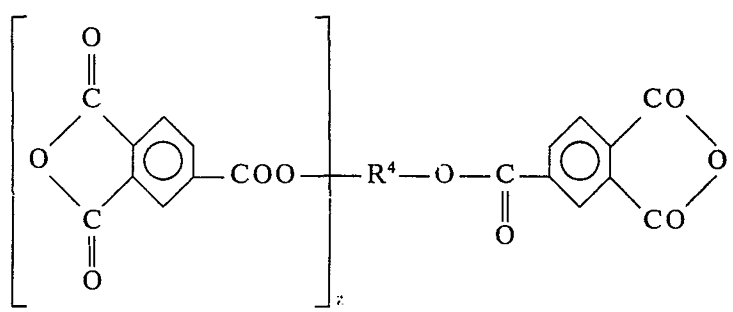

(IIa)

mit

z = 1 bis 3 und insbesondere mit

$R^4$ = 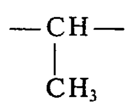 und z = 1,

beziehungsweise

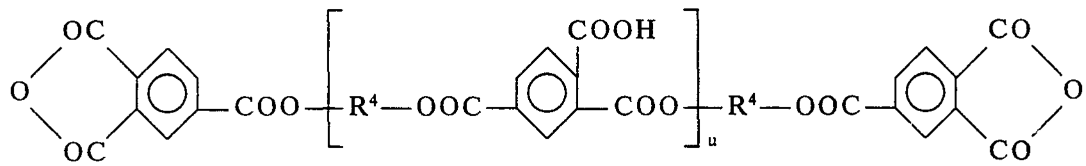

(VI)

mit

u = 1 bis 8, worin $R^4$ bevorzugt

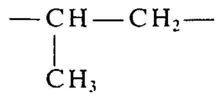

ist, bzw. jeweils der entsprechenden Säuren

darstellt, wobei der Rest $R^2$ noch die in Formel I und I a angegebenen Säure- bzw. Anhydridgruppen trägt,

$R^4$ einen zwei- bis vierwertigen aliphatischen Kohlenwasserstoffrest mit 1 bis 28, vorzugsweise 1 bis 15 C-Atomen, einen solchen Rest, der mindestens einmal durch Sauerstoffbrücken oder $-HC{=}CH-$-Gruppen unterbrochen ist oder mit einer Estergruppe mit 1 bis 6, vorzugsweise 1 bis 3 C-Atomen oder mit einer $COOH$-Gruppe substituiert ist, einen aromatischen Rest mit 6 bis 43 C-Atomen gemäß Formeln

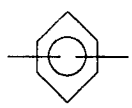

(XVI)

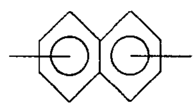

(XVII)

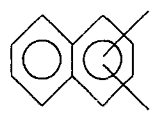

(XVIII)

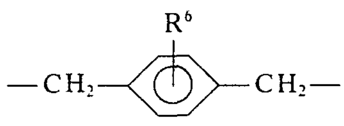

(XIX)

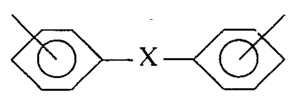

(XX)

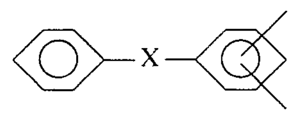

(XXI)

wobei die aromatischen Reste ggf. durch mindestens einen Rest

$R^6$ der Gruppe Alkyl, Alkoxy mit jeweils 1 bis 6 C-Atomen und Halogen substituiert sind, oder einen Piperazinrest,
worin in Formel (XX) und (XXI)

X die Bedeutung gemäß einer der Formeln

$-O-$

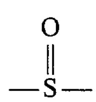

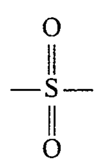

$-(CH_2)_n-$

$-CO-$

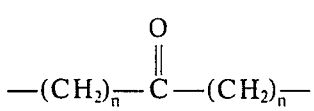

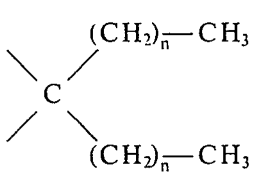

$-(CH_2)_n-O-(CH_2)_n-$

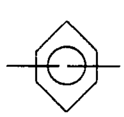

$n = 1-8$

(XXII)

hat,

$R^5$ dieselbe Bedeutung wie $R^2$ hat oder den Rest einer mindestens zweibasischen cyclischen Carbonsäure mit einer in o- oder peri-Stellung zur Esterbindung befindlichen COOH-Gruppe bedeuten,

b) in Form der nicht an den Rest $R^1$ addierten Komponenten,
c) entsprechend Formel (I) wie unter a) definiert, jedoch mit der Abweichung, daß die Anhydridgruppen in Formel (I) ganz oder teilweise durch freie Säure- und/oder Estergruppen oder daß die diesen Anhydridgruppen entsprechenden freien, gegeneinander orthoständigen COOH-Gruppen in Formel (Ia) ganz oder teilweise durch Estergruppen ersetzt sind,
d) wie unter b) definiert, mit der Abweichung, daß die Polycarbonsäureverbindung mit dem Rest $R^2$ bzw. $R^5$ statt der Anhydridgruppen ganz oder teilweise freie Säure- und/oder Estergruppen aufweist,

enthält,

wobei das Verhältnis der freien Carboxylgruppen der Polycarbonsäureeinheiten B) einschließlich der nicht an $R^1$ gebundenen Polycarbonsäurederivate zum Epoxydgruppenäquivalent in den Epoxydverbindungen 1 : 5 bis 5 : 1 und das Verhältnis der Anhydridgruppen der Polycarbonsäureeinheiten B) einschließlich der nicht an $R^1$ gebundenen Polycarbonsäurederivate zu den OH-Gruppen der Epoxydverbindungen 20 : 1 bis 1 : 20 beträgt.

2. Mischung nach Anspruch 1, dadurch gekennzeichnet, daß die Polycarbonsäureverbindung mit dem Rest $R^5$ ein Säureanhydrid einer Polycarbonsäure mit der Gruppierung gemäß Formeln IV, V, Vb, VI und VIII ist, in denen die Anhydridgruppen zumindest teilweise hydrolysiert oder verestert sein können, und/oder Trimellithsäureanhydrid ist.

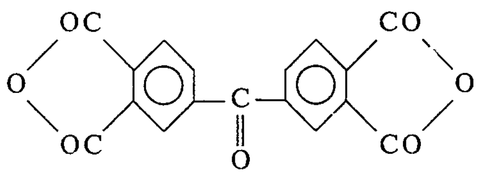
(IV)

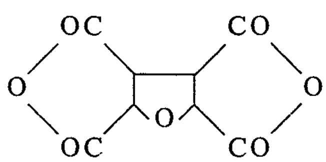
(V)

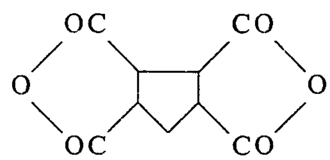
(Vb)

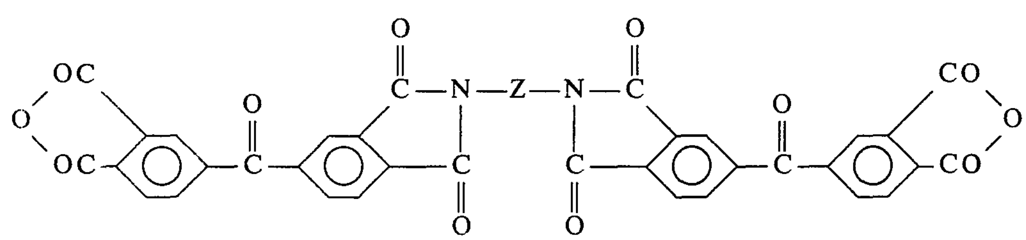
(VIII)

worin

Z = $(CH_2)_m$, worin m eine ganze Zahl von 2 bis 8 ist, oder die Bedeutung gemäß einer der Formeln

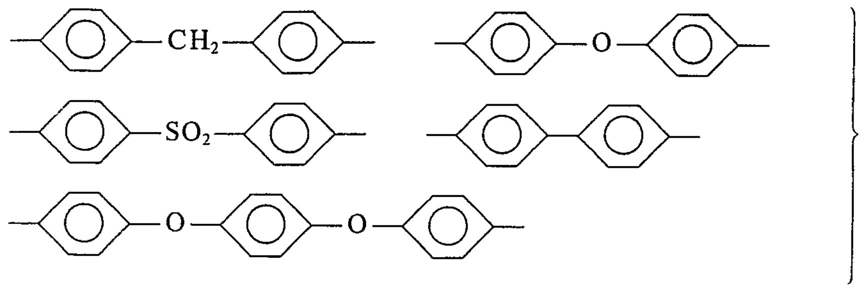 (X)

hat.

3. Mischung nach Anspruch 1 oder 2, dadurch gekennzeichnet, daß das Verhältnis der freien Carboxylgruppen der Polycarbonsäureeinheiten B) einschließlich der nicht an $R^1$ gebundenen Polycarbonsäurederivate zum Epoxydgruppenäquivalent in den Epoxydverbindungen 1 : 1,5 bis 1 : 0,5 und das Verhältnis der Anhydridgruppen der Polycarbonsäureeinheiten B) einschließlich der nicht an $R^1$ gebundenen Polycarbonsäurederivate zu den OH-Gruppen der Epoxydverbindungen 5 : 1 bis 1 : 5 beträgt.

4. Mischung nach einem oder mehreren der Ansprüche 1 bis 3, dadurch gekennzeichnet, daß sie mindestens eine flüssige Komponente A) oder B) enthält.

5. Mischung nach einem oder mehreren der Ansprüche 1 bis 4, dadurch gekennzeichnet, daß sie zusätzlich noch mindestens ein wärmehärtbares hydroxylgruppenhaltiges Kunstharz in einem Anteil von insgesamt bis zu 30, vorzugsweise 2 bis 15 Gew.-% des Gesamtfestkörpergehalts enthält.

6. Mischung nach einem oder mehreren der Ansprüche 1 bis 5, dadurch gekennzeichnet, daß sie zusätzlich einen Katalysator in einem Anteil von bis zu 5, vorzugsweise 0,01 bis 0,5 Gewichtsprozent, bezogen auf Festkörpergehalt, enthält.

7. Mischung nach einem oder mehreren der Ansprüche 1 bis 6, dadurch gekennzeichnet, daß die COOH-Gruppen der Komponente B) in einem Anteil von 0,1 bis 20, vorzugsweise 2 bis 10% der COOH-Gruppen-Äquivalente in Form eines Metallsalzes oder eines quartären Ammoniumsalzes vorliegen.

8. Mischung nach einem oder mehreren der Ansprüche 1 bis 7, dadurch gekennzeichnet, daß sie in Pulverform vorliegt und vorzugsweise einen Erweichungspunkt von 40 bis 200, insbesondere 55 bis 125°C (nach Durrans) und eine Glasübergangstemperatur von 22 bis 100, insbesondere 30 bis 70°C aufweist.

9. Verfahren zur Herstellung gehärteter Produkte aus der Mischung nach einem oder mehreren der Ansprüche 1 bis 7, dadurch gekennzeichnet, daß die Mischung bei 20 bis 210, vorzugsweise 80 bis 190°C in Gegenwart eines Lösungsmittels gehärtet wird.

10. Verfahren zur Herstellung gehärteter Produkte aus der Mischung nach Anspruch 8, dadurch gekennzeichnet, daß die pulverförmige Mischung bei 80 bis 310, vorzugsweise 100 bis 280°C gehärtet wird.

11. Reaktive härtbare Polymerenmischung auf der Basis von

A) Epoxydverbindungen und
B) Polycarbonsäureeinheiten,

dadurch gekennzeichnet, daß die Mischung als Polycarbonsäureeinheit B) eine Verbindung der Formel (IIa) enthält, in der die Anhydridgruppen ganz oder zum Teil hydrolysiert oder verestert sein können.

**Claims**

1. A reactive hardenable polymer composition based on A) epoxy compounds and B) polycarboxylic acid units characterized in that the mixture contains as polycarboxylic acid unit B) one or more compounds a) to d)

a) of the formula

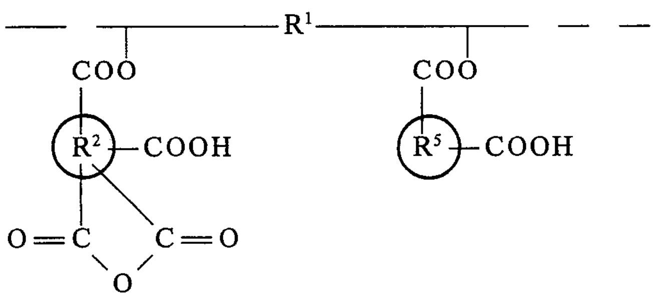 (I)

or

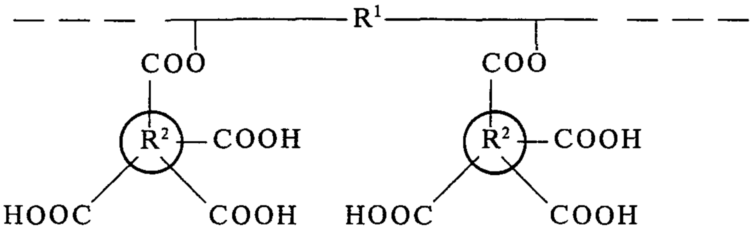

(Ia)

respectively, wherein

$R^1$ is the radical derived from one or more polymerisation and or condensation products containing lateral hydroxy groups selected from the group of polyesters, polymers, both having a hydroxy number from 20 to 300 in each case, and phenol resins having a hydroxy number between 100 and 800,

$R^2$ represents the residue of an anhydride of the formula

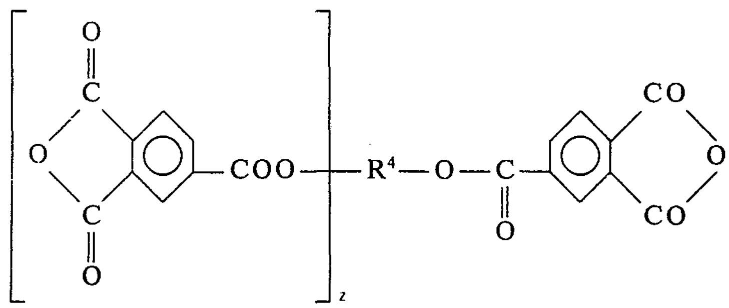

(IIa)

in which

z is from 1 to 3, and in particular

$R^4$ = 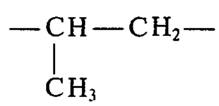 and z is 1,

or

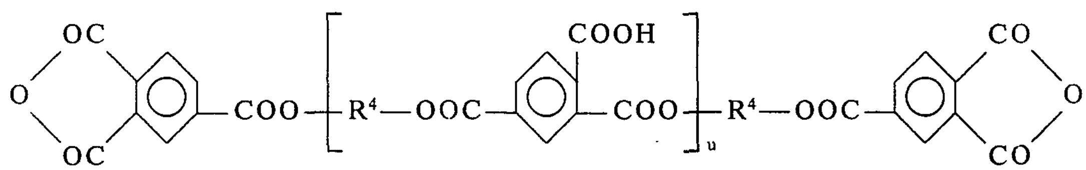

(VI)

wherein u is from 1 to 8 and $R^4$ is preferably

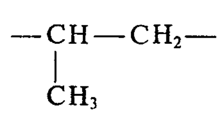

or in each case the corresponding acids, $R^2$ is still bearing the carboxylic or anhydride groups, respectively, shown in formulae (I) and (I a),

$R^4$ is a bi- to tetravalent aliphatic hydrocarbon group having 1 to 28, preferably 1 to 15 carbon atoms, such radical which is at least once interrupted by oxygen bridges or by $-HC=CH-$ groups or is substituted by an ester group with 1 to 6, preferably 1 to 3 carbon atoms or is substituted by a COOH— group, or is an aromatic group having 6 to 43 carbon atoms of the formulae

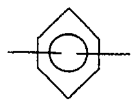
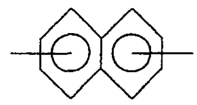
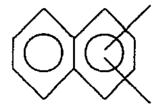

(XVI) (XVII) (XVIII)

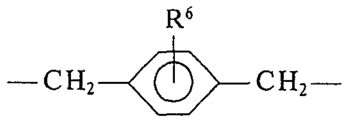
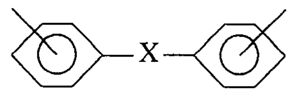
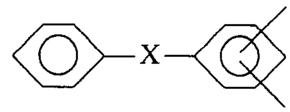

(XIX) (XX) (XXI)

in which the aromatic groups, if desired, are substituted by at least one group

$R^6$ of the group consisting of alkyl, alkoxy each having 1 to 6 carbon atoms and halogen, or is a piperazine group, wherein in formulae (XX) and (XXI)

X has the meaning of one of the formulae

$-O-$ 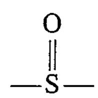 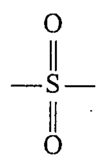 $-(CH_2)_n-$ $-CO-$

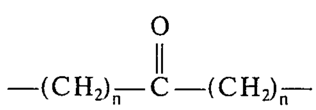

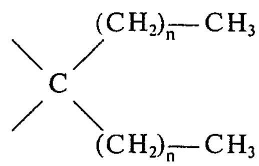

$-(CH_2)_n-O-(CH_2)_n-$

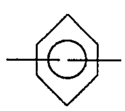

(XXII)

$R^5$ has the same meaning as $R^2$ or is the radical of an at least dibasic cyclic carboxylic acid having a COOH group in an o- or peri-position relative to the ester bond

b) in the form of the components not added to the radical $R^1$,

c) as in formula (I) as defined sub a) with the modification, however, that the anhydride groups in formula (I) are replaced totally or partially by free acid and/or ester groups, or that the free COOH groups corresponding to these anhydride groups in formula (Ia) which are ortho-positioned are replaced totally or partially by ester groups,

d) as defined sub b) with the modification, that the polycarboxylic compounds having $R^2$ or $R^5$ has totally or partially free acid and/or ester groups instead of the anhydride groups

wherein the ratio of the free carboxylic groups of the polycarboxylic acid units B), including the derivatives of the polycarboxylic acids not bound to $R^1$, to the epoxy equivalent in the epoxy compounds is from 1 : 5 to 5 : 1 and the ratio of the anhydride groups of the polycarboxylic acid units B), including the derivatives of the polycarboxylic acids not bound to $R^1$, to the OH groups of the epoxy compounds is from 20 : 1 to 1 : 20.

2. A composition according to claim 1, characterized in that wherein the polycarboxylic acid compound containing $R^5$ is an anhydride of a polycarboxylic acid having a grouping of the formulae (IV), (V), (Vb), (VI) or (VIII) in which the anhydride groups at least partially may be hydrolyzed or esterified, and/or is trimellitic anhydride

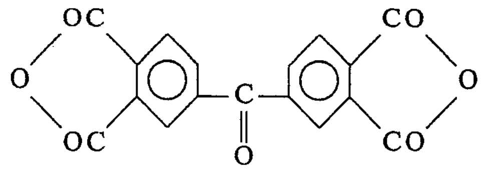
(IV)

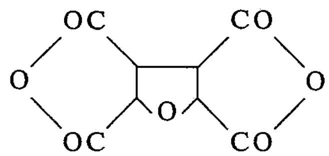
(V)

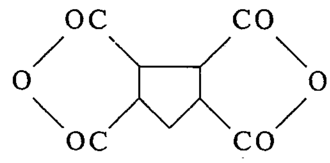
(Vb)

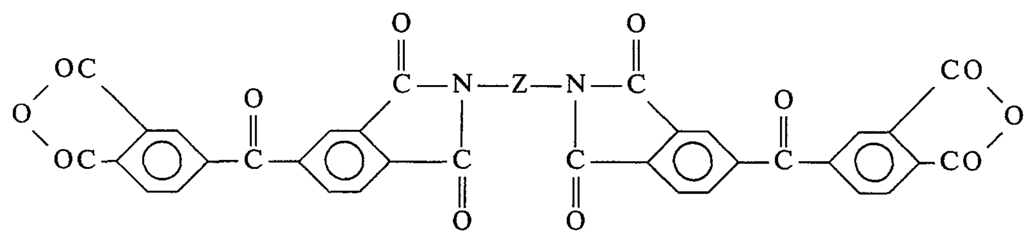
(VIII)

in which

Z is $(CH_2)_m$ wherein m is an integer from 2 to 8, or has the meaning of one of the formulae

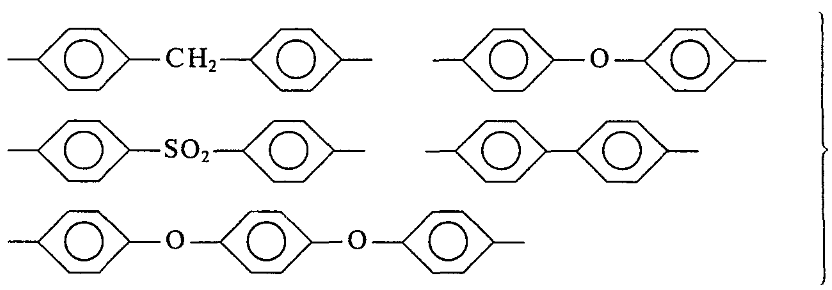
(X)

3. A composition according to claim 1 or 2 characterized in that the ratio of the free carboxylic groups of the polycarboxylic acid units B), including the derivatives of the polycarboxylic acids not bound to $R^1$, to the epoxy equivalent in the epoxy compounds is from 1 : 1,5 to 1 : 0,5 and the ratio of the anhydride groups of the polycarboxylic acid units B), including the derivatives of the polycarboxylic acids not bound to $R^1$, to the OH groups of the epoxy compounds is from 5 : 1 to 1 : 5.

4. A composition according to one or more of claims 1 to 3, characterized in that it contains at least one liquid component A) or B).

5. A composition according to one or more of claims 1 to 4 characterized in that it additionally contains at least one heat-hardenable synthetic resin containing hydroxy groups in an amount of up to 30, preferably from 2 to 15% by weight of the total solids content.

6. A composition according to one or more of claims 1 to 5, characterized in that it additionally contains a catalyst in an amount of up to 5, preferably from 0.01 to 0.5% by weight, referred to the solids content.

7. A composition according to one or more of claims 1 to 6, characterized in that the COOH-groups of component B) are present in the form of a metal salt or of a quaternary ammonium salt in an amount of from 0.1 to 20% preferably from 2 to 10%, referred to the equivalents of COOH-groups.

8. A composition according to one or more of claims 1 to 7, characterized in that it is present in powdered form and preferably has a softening point of from 40 to 200, particularly 55 to 125°C (according to Durrans) and has a glass transition temperature from 22 to 100, particularly from 30 to 70°C.

9. A process for the preparation of hardened products from the composition of one or more of claims

1 to 7, characterized in that the composition is cured at 20 to 210°C, preferably 80 to 190°C, in the presence of a solvent.

10. A process for the preparation of hardened products from the composition of claim 8, characterized in that a powdered composition is hardened at 80 to 310, preferably 100 to 280°C.

11. A reactive hardenable polymer mixture based on

A) epoxy compounds and
B) polycarboxylic acid units,

characterized in that the mixture contains as polycarboxylic acid unit B) a compound of formula (IIa) in which the anhydride groups may totally or partially be hydrolyzed or esterified.

**Revendications**

1. Mélange polymère réactif durcissable à base A) de composés époxydiques et B) de composantes polycarboxyliques, mélange caractérisé en ce qu'il contient, comme composante polycarboxylique B), un ou plusieurs des composés a) à d) définis ci-dessous:

a) composés répondant à la formule

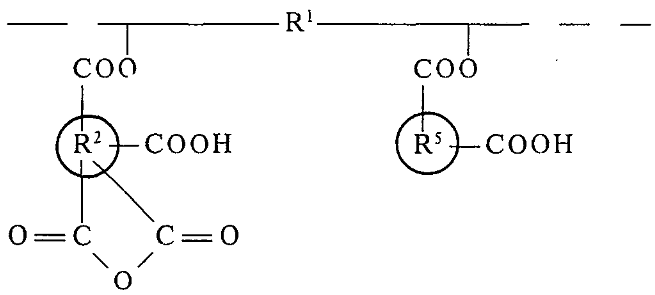

(I)

ou à la formule

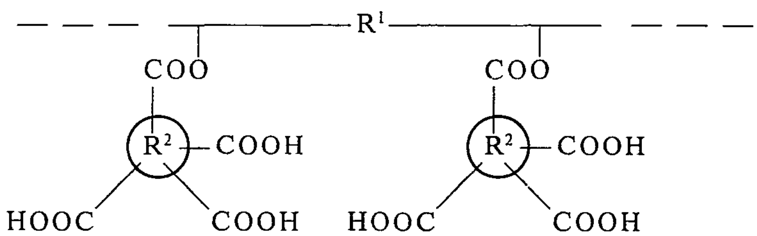

(Ia)

dans lesquelles

$R^1$ représente le radical d'un ou plusieurs produits de polymérisation et/ou de condensation polymères porteurs de groupes —OH disposés latéralement, produits qui sont des polyesters ou des polymères, tous deux avec un indice d'hydroxyle de 20 à 300, ou des résines phénoliques d'indice d'hydroxyle compris entre 100 et 800,

$R^2$ représente le radical d'un anhydride répondant à la formule II a

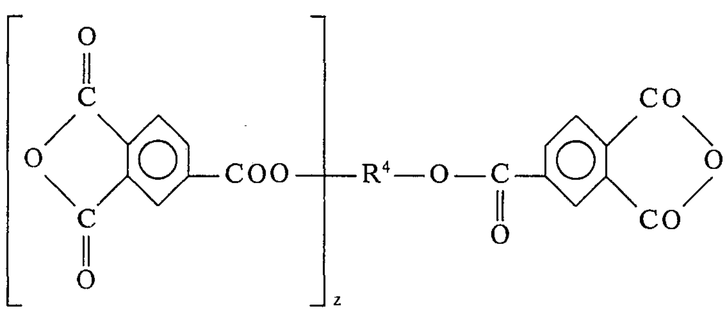

(IIa)

dans laquelle

z désigne un nombre de 1 à 3 et en particulier dans laquelle

$R^4$ représente

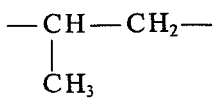 et z est égal à 1,

ou d'un anhydride répondant à la formule VI

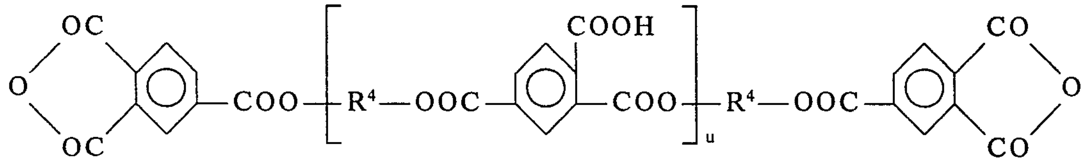

(VI)

dans laquelle u désigne un nombre de 1 à 8 et $R^4$ représente de préférence un radical

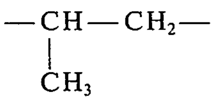

ou le radical d'un des acides correspondants, le radical $R^2$ portant en outre des groupes acides et/ou anhydrides représentés sur la formule I ou la formule I a

$R^4$ représente un radical hydrocarboné aliphatique bi-, tri- ou quadrivalent contenant de 1 à 28 atomes de carbone, de préférence de 1 à 15, un radical de ce genre qui est interrompu au moins une fois par un pont oxygène ou un groupement $-HC{=}CH-$ ou qui porte comme substituant un groupe ester contenant de 1 à 6 atomes de carbone, de préférence de 1 à 3, ou un groupe $-COOH$, un radical aromatique contenant de 6 à 43 atomes de carbone et répondant à l'une des formules suivantes:

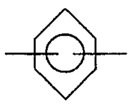

(XVI)

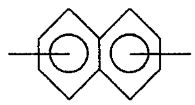

(XVII)

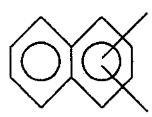

(XVIII)

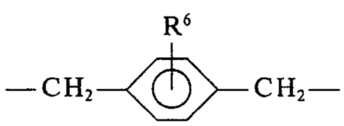

(XIX)

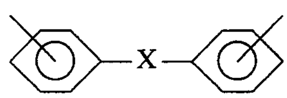

(XX)

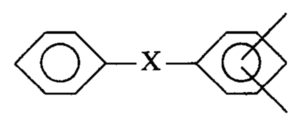

(XXI)

dans lesquelles les radicaux aromatiques portent éventuellement un ou plusieurs radicaux

$R^6$ pris dans l'ensemble constitué par les alkyles en $C_1-C_6$, les alcoxy en $C_1-C_6$ et les halogènes,
ou d'un radical de pipérazine,

X représente (dans les formules XX et XXI) un radical répondant à l'une des formules (voir formules page suivante)

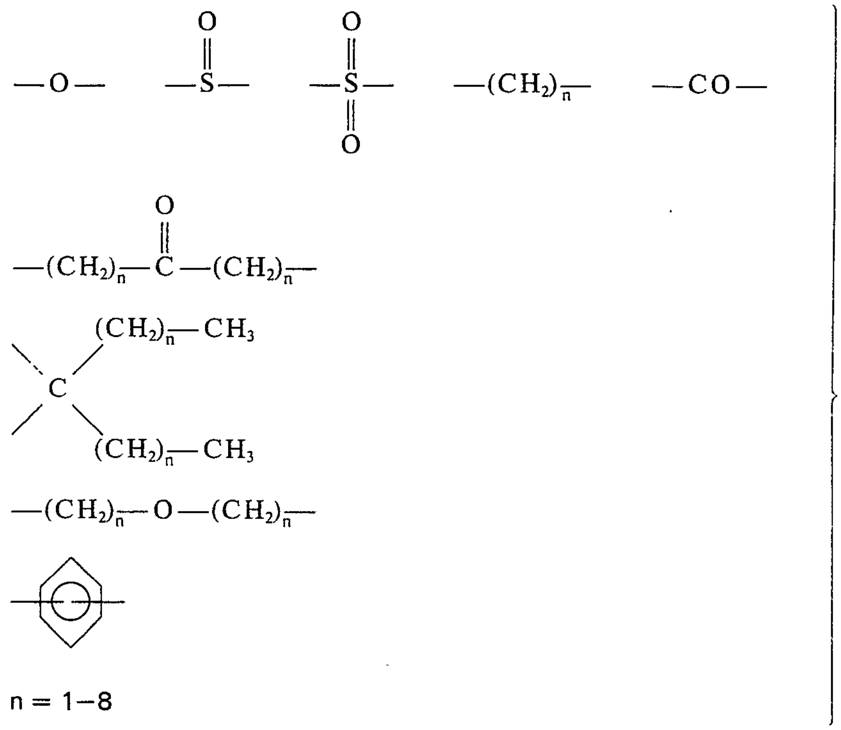

(XXII)

n = 1–8

$R^5$ a la même signification que $R^2$ ou représente le radical d'un acide carboxylique cyclique contenant au moins deux groupes acides et ayant un groupe $-COOH$ en position ortho ou péri par rapport à la liaison ester,

b) composés de ce type sous la forme des composantes non fixées sur le radical $R^1$,
c) composés de formule I tels que définis sous a) mais qui en diffèrent en ce que les groupes anhydrides, dans la formule I, sont remplacés totalement ou partiellement par des groupes acides libres et/ou des groupes esters ou en ce que les groupes $-COOH$ libres correspondant à ces groupes anhydrides en ortho l'un par rapport à l'autre, sont remplacés, dans la formule Ia, totalement ou partiellement par des groupes esters,
d) composés tels que définis sous b) avec cette différence toutefois qui dans le composé polycarboxylique contenant le radical $R^2$ ou $R^5$ les groupes anhydrides sont remplacés, totalement ou partiellement, par des groupes acides libres et/ou des groupes esters,

le rapport entre les groupes carboxy libres des composantes polycarboxyliques B), y compris les dérivés d'acides polycarboxyliques non liés à $R^1$, et l'équivalent de groupes époxy dans les composés époxydiques étant compris entre 1 : 5 et 5 : 1, et le rapport entre les groupes anhydrides des composantes polycarboxyliques B), y compris les dérivés d'acides polycarboxyliques non liés à $R^1$, et les groupes $-OH$ des composés époxydiques étant compris entre 20 : 1 et 1 : 20.

2. Mélange selon la revendication 1, caractérisé en ce que le composé polycarboxylique contenant le radical $R^5$ est un anhydride d'acide polycarboxylique contenant un groupement répondant à l'une des formules IV, V, Vb, VI et VIII dans lesquelles les groupes anhydrides sont au moins partiellement hydrolysés ou estérifiés, et/ou est l'anhydride trimellitique,

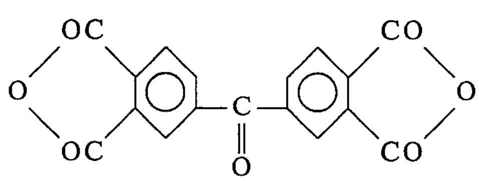

(IV)

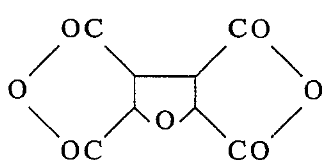

(V)

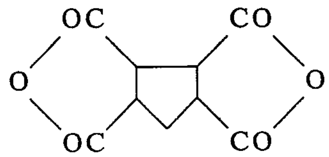

(Vb)

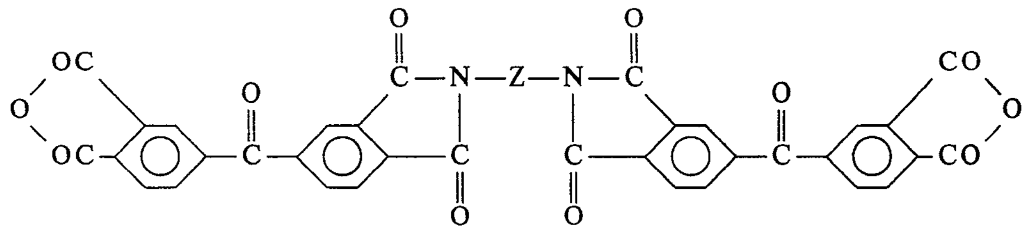

(VIII)

où

Z représente un groupement $-(CH_2)_m-$ dans lequel m désigne un nombre entier de 2 à 8, ou représente l'un des radicaux suivants:

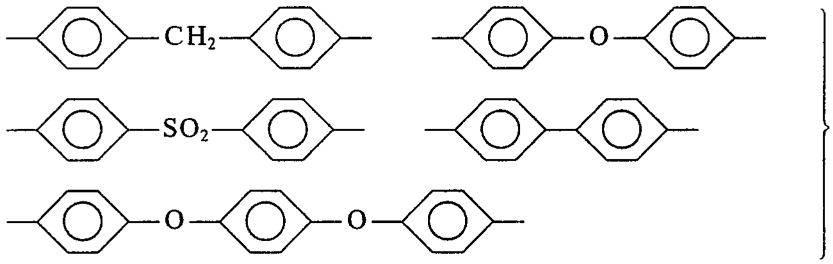

(X)

3. Mélange selon l'une des revendications 1 et 2, caractérisé en ce que le rapport entre les groupes carboxy libres des composantes polycarboxyliques B), y compris des dérivés d'acides polycarboxyliques non liés à $R^1$, et l'équivalent de groupes époxydiques dans les composés époxydiques est compris entre 1 : 1,5 et 1 : 0,5, et le rapport entre les groupes anhydrides des composantes polycarboxyliques B), a compris des dérivés d'acides polycarboxyliques non liés à $R^1$, et les groupes $-OH$ des composés époxydiques est compris entre 5 : 1 et 1 : 5.

4. Mélange selon l'une quelconque des revendications 1 à 3, caractérisé en ce qu'il contient au moins une composante A) ou B) liquide.

5. Mélange selon l'une quelconque des revendications 1 à 4, caractérisé en ce qu'il contient en outre encore au moins une résine synthétique hydroxylée thermodurcissable en une proportion povant représenter au total jusqu'à 30% en poids, de préference de 2 à 15% en poids, de la teneur totale en matière solide.

6. Mélange selon l'une quelconque des revendications 1 à 5, caractérisé en ce qu'il contient en outre un catalyseur en une proportion pouvant aller jusqu'à 5% en poids, de préference de 0,01 à 0,5% en poids, par rapport à la teneur totale en matière solide.

7. Mélange selon l'une quelconque des revendications 1 à 6, caractérisé en ce que les groupes $-COOH$ de la composante B) sont présents, en une proportion de 0,1 à 20%, de préference de 2 à 10%, des équivalents de groupes $-COOH$ sous la forme d'un sel métallique ou d'un sel d'ammonium quaternaire.

8. Mélange selon l'une quelconque des revendications 1 à 7, caractérisé en ce qu'il est sous la forme d'une poudre et en ce qu'il a de préference un point de ramollissement de 40 à 200° C, plus spécialement de 55 à 125° C (selon Durrans) et une température de transition vitreuse de 22 à 100° C, plus particulièrement de 30 à 70° C.

9. Procédé de fabrication de produits durcis à partir d'un mélange selon l'une quelconque des revendications 1 à 7, procédé caractérisé en ce qu'on durcit le mélange à une température de 20 à 210° C, de préference de 80 à 190° C, en présence d'un solvant.

10. Procédé de fabrication de produits durcis à partir d'un mélange selon la revendication 8, procédé caractérisé en ce qu'on durcit le mélange pulvérulent à une température de 80 à 310° C, de préference de 100 à 280° C.

11. Mélange polymère réactif durcissable à base de composés époxydiques A) et de composantes polycarboxyliques B), mélange caractérisé en ce qu'il contient, comme composante polycarboxylique B), un composé de formule IIa dans lequel les groupes anhydrides peuvent être totalement ou partiellement hydrolysés ou estérifiés.

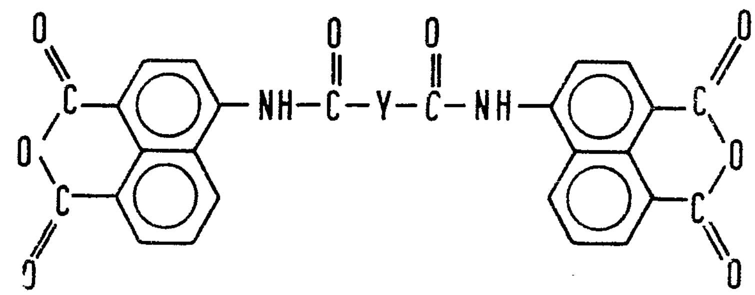

(XI)

Y = 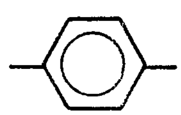 , 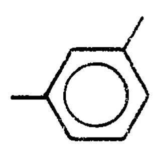 , 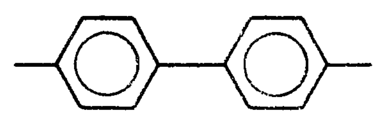

= $(CH_2)_p$ $p = 2-8$

(XII)

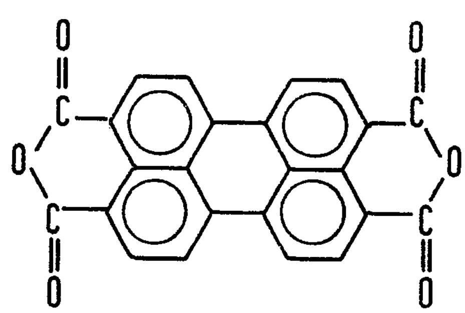

(XIII)

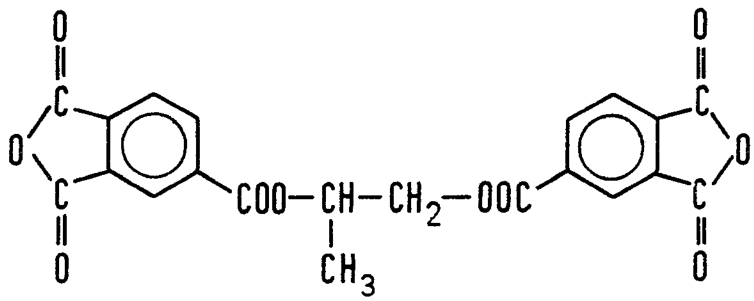

(XIV)

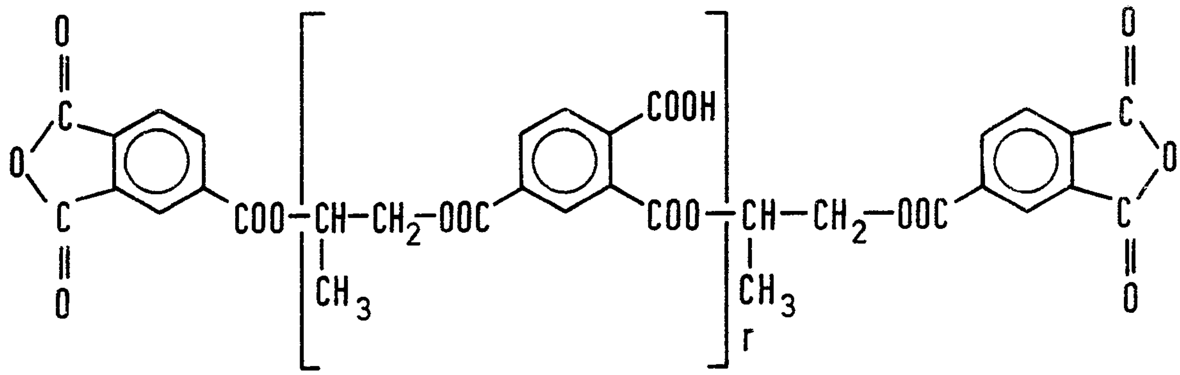

r = 1–8

(XV)

$$-\!\left[O-CH_2-CH_2\right]_2\!-O-$$

(XXIV)